(19) Europäisches Patentamt European Patent Office Office européen des brevets

(11) **EP 3 398 146 B1**

(12) **EUROPEAN PATENT SPECIFICATION**

(45) Date of publication and mention of the grant of the patent:
**01.12.2021 Bulletin 2021/48**

(21) Application number: **16882214.6**

(22) Date of filing: **01.06.2016**

(51) Int Cl.:
*H04L 12/18* (2006.01)        *H04L 12/58* (2006.01)
*G06Q 30/02* (2012.01)

(86) International application number:
**PCT/US2016/035186**

(87) International publication number:
**WO 2017/116493 (06.07.2017 Gazette 2017/27)**

(54) **SURGE DETECTOR FOR CONTENT CONSUMPTION**

ÜBERSPANNUNGSDETEKTOR FÜR INHALTSVERBRAUCH

DÉTECTEUR DE CRÊTE POUR UNE CONSOMMATION DE CONTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 US 201514981529**

(43) Date of publication of application:
**07.11.2018 Bulletin 2018/45**

(73) Proprietor: **Bombora, Inc.**
**New York, NY 10010 (US)**

(72) Inventors:
  • **KHAVRONIN, Oleg Valentin**
    **New York, NY 10010 (US)**
  • **LIN, Benny**
    **New York, NY 10010 (US)**
  • **LIVHITS, Anthony**
    **New York, NY 10010 (US)**
  • **MATLICK, Erik Gregory**
    **New York, NY 10010 (US)**
  • **BURTON, Christian Michael**
    **New York, NY 10010 (US)**
  • **ARMSTRONG, Robert James**
    **New York, NY 10010 (US)**

(74) Representative: **Prinz & Partner mbB**
**Patent- und Rechtsanwälte**
**Rundfunkplatz 2**
**80335 München (DE)**

(56) References cited:
US-A1- 2004 267 723    US-A1- 2008 126 178
US-A1- 2010 100 537    US-A1- 2011 320 715
US-A1- 2013 132 339    US-A1- 2013 159 505
US-A1- 2014 067 831    US-A1- 2014 096 035
US-A1- 2014 156 681    US-A1- 2014 201 240
US-A1- 2014 280 890    US-A1- 2015 074 131
US-B1- 7 185 065

**Description**

The present application claims priority to U.S. Patent Application No. 14/981,529, filed December 28, 2015, which is a continuation in part of U.S. Patent Application Ser. No. 14/498,056, entitled: CONTENT CONSUMPTION MONITOR.

BACKGROUND

Users receive a random variety of different information from a random variety of different businesses. For example, users may constantly receive promotional announcements, advertisements, information notices, event notifications, etc. Users request some of this information. For example, a user may register on a company website to receive sales or information announcements. However, much of the information is of little or no interest to the user. For example, the user may receive emails announcing every upcoming seminar, regardless of the subject matter.

The user also may receive unsolicited information. For example, a user may register on a website to download a white paper on a particular subject. A lead service then may sell the email address to companies that send the user unsolicited advertisements. Users end up ignoring most or all of these emails since most of the information has no relevance or interest. Alternatively, the user directs all of these emails into a junk email folder.

US 2010/0100537 A1 discloses systems and methods for identifying trends in web feeds collected from various content servers.

In US 7 185 065 B1 a system and method are described for collecting and analyzing electronic discussion messages to categorize the message communications and to identify trends and patterns in pre-determined markets.

In US 2004/0267723 A1 methods, apparatus, message formats and data structures are disclosed for resolving ambiguities with respect to a user topic interest so that useful topic-relevant ads can be presented.

US 2014/0201240 A1 provides a system for identifying one or more multimedia content relevant to a trending topic.

SUMMARY

The invention describes a method as defined in independent claim 1, and corresponding computer-readable storage medium and apparatus as defined in claims 14 and 15, respectively. Additional aspects of the invention are described in the dependent claims.

BRIEF DESCRIPTION OF THE DRAWINGS

FIG. 1 depicts an example content consumption monitor (CCM).
FIG. 2 depicts an example of the CCM in more detail.
FIG. 3 depicts an example operation of a CCM tag.
FIG. 4 depicts example events processed by the CCM.
FIG. 5 depicts an example user intent vector.
FIG. 6 depicts an example process for segmenting users.
FIG. 7 depicts an example process for generating company intent vectors.
FIG. 8 depicts an example consumption score generator.
FIG. 9 depicts the example consumption score generator in more detail.
FIG. 10 depicts an example process for identifying a surge in consumption scores.
FIG. 11 depicts an example process for calculating initial consumption scores.
FIG. 12 depicts an example process for adjusting the initial consumption scores based on historic baseline events.
FIG. 13 depicts an example process for mapping surge topics with contacts.
FIG. 14 depicts an example content consumption monitor calculating content intent.
FIG. 15 depicts an example process for adjusting a consumption score based on content intent.
FIG. 16 depicts an example computing device for the CCM.

DETAILED DESCRIPTION

Companies may research topics on the Internet as a prelude to purchasing items or services related to the topics. A content consumption monitor (CCM) generates consumption scores identifying the level of company interest in different topics. The CCM may go beyond just identifying companies interested in specific topics and also identify surge data indicating when the companies are most receptive to direct contacts regarding different topics. Publishers may use the surge data to increase interest in published information. In one example, the publishers may include advertisers who use the surge data to increase advertising conversion rates.

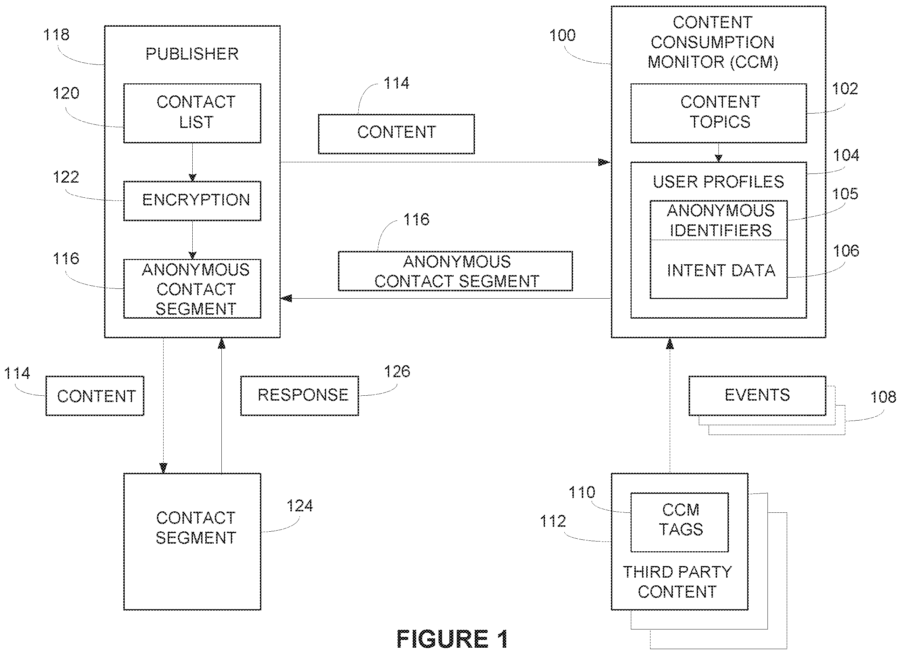

FIG. 1 depicts a content consumption monitor (CCM) 100. CCM 100 may be a server or any other computing system that communicates with a publisher 118 and monitors user accesses to third party content 112. Publisher 118 is any server or computer operated by a company or individual that wants to send content 114 to an interested group of users. This group of users is alternatively referred to as contact segment 124.

For example, publisher 118 may be a company that sells electric cars. Publisher 118 may have a contact list 120 of email addresses for customers that have attended prior seminars or have registered on the publisher website. Contact list 120 also may be generated by CCM tags 110 that are described in more detail below. Publisher 118 also may generate contact list 120 from lead lists provided by third parties lead services, retail outlets, and/or other promotions or points of sale, or the like or any combination thereof. Publisher 118 may want to send email announcements for an upcoming electric car seminar. Publisher 118 would like to increase the number of attendees at the seminar.

Third party content 112 comprises any information on any subject accessed by any user. Third party content 112 may include web pages provided on website servers operated by different businesses and/or individuals. For example, third party content 112 may come from different websites operated by on-line retailers and wholesalers, on-line newspapers, universities, blogs, municipalities, social media sites, or any other entity that supplies content.

Third party content 112 also may include information not accessed directly from websites. For example, users may access registration information at seminars, retail stores, and other events. Third party content 112 also may include content provided by publisher 118.

Computers and/or servers associated with publisher 118, content segment 124, CCM 100 and third party content 112 may communicate over the Internet or any other wired or wireless network including local area networks (LANs), wide area networks (WANs), wireless networks, cellular networks, Wi-Fi networks, Bluetooth® networks, cable networks, or the like, or any combination thereof.

Some of third party content 112 may contain CCM tags 110 that capture and send events 108 to CCM 100. For example, CCM tags 110 may comprise JavaScript added to website web pages. The website downloads the web pages, along with CCM tags 110, to user computers. User computers may include any communication and/or processing device including but not limited to laptop computers, personal computers, smart phones, terminals, tablet computers, or the like, or any combination thereof. CCM tags 110 monitor web sessions send some captured web session events 108 to CCM 100.

Events 108 may identity third party content 112 and identify the user accessing third party content 112. For example, event 108 may include a universal resource locator (URL) link to third party content 112 and may include a bashed user email address or cookie identifier associated with the user that accessed third party content 112. Events 108 also may identify an access activity associated with third party content 112. For example, event 108 may indicate the user viewed a web page, downloaded an electronic document, or registered for a seminar.

CCM 100 builds user profiles 104 from events 108. User profiles 104 may include anonymous identifiers 105 that associate third party content 112 with particular users. User profiles 104 also may include intent data 106 that identifies topics in third party content 112 accessed by the users. For example, intent data 106 may comprise a user intent vector that identifies the topics and identifies levels of user interest in the topics.

As mentioned above, publisher 118 may want to send an email announcing an electric car seminar to a particular contact segment 124 of users interested in electric cars. Publisher 118 may send the email as content 114 to CCM 100. CCM 100 identifies topics 102 in content 114.

CCM 100 compares content topics 102 with intent data 106. CCM 100 identifies the user profiles 104 that indicate an interest in content 114. CCM 100 sends anonymous identifiers 105 for the identified user profiles 104 to publisher 118 as anonymous contact segment 116.

Contact list 120 may include user identifiers, such as email addresses, names, phone numbers, or the like, or any combination thereof. The identifiers in contact list 120 are hashed or otherwise de-identified by an algorithm 122. Publisher 118 compares the hashed identifiers from contact list 120 with the anonymous identifiers 105 in anonymous contact segment 116.

Any matching identifiers are identified as contact segment 124. Publisher 118 identifies the unencrypted email addresses in contact list 120 associated with contact segment 124. Publisher 118 sends content 114 to the email addresses identified for contact segment 124. For example, publisher 118 sends email announcing the electric car seminar to contact segment 124.

Sending content 114 to contact segment 124 may generate a substantial lift in the number of positive responses 126. For example, assume publisher 118 wants to send emails announcing early bird specials for the upcoming seminar. The seminar may include ten different tracks, such as electric cars, environmental issues, renewable energy, etc. In the past, publisher 118 may have sent ten different emails for each separate track to everyone in contact list 120.

Publisher 118 may now only send the email regarding the electric car track to contacts identified in contact segment 124. The number of positive responses 126 registering for the electric car track of the seminar may substantially increase since content 114 is now directed to users interested in electric cars.

In another example, CCM 100 may provide local ad campaign or email segmentation. For example, CCM 100 may provide a "yes" or "no" as to whether a particular advertisement should be shown to a particular user. In this example, CCM 100 may use the hashed data without re-identification of users and the "yes/no" action recommendation may key off of a de-identified hash value.

CCM 100 may revitalize cold contacts in publisher contact list 120. CCM 100 can identify the users in contact list 120 that are currently accessing other third party content 112 and identify the topics associated with third party content 112. By monitoring accesses to third party content 112, CCM 100 may identify current user interests even though those interests may not align with the content currently provided by publisher 118. Publisher 118 might reengage the cold contacts by providing content 114 more aligned with the most relevant topics identified in third party content 112.

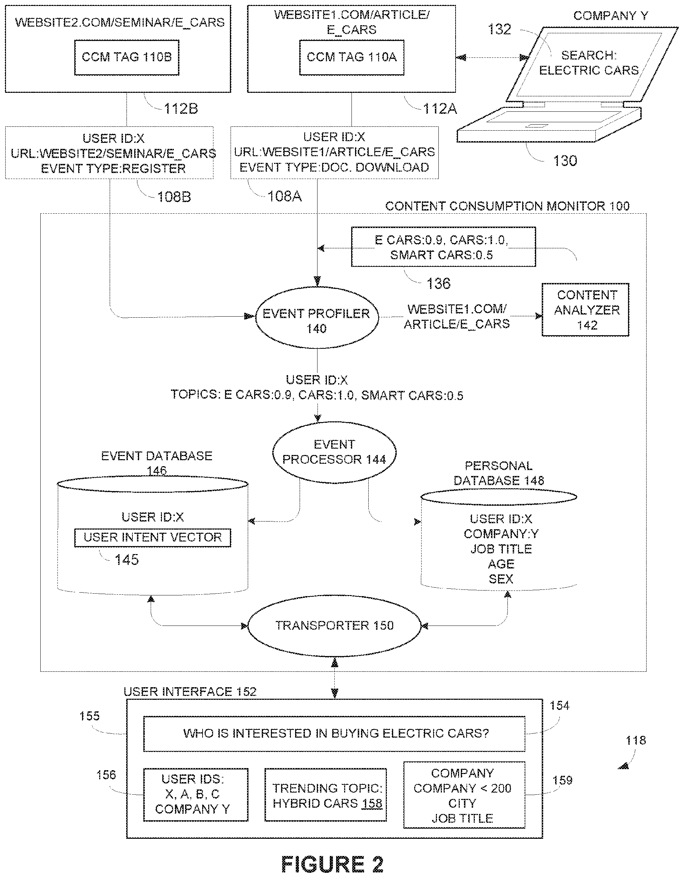

FIG. 2 is a diagram explaining the content consumption manager in more detail. A user may enter a search query 132 into a computer 130 via a search engine. The user may work for a company Y. For example, the user may have an associated email address USER@COMPANY Y.com.

In response to search query 132, the search engine may display links to content 112A and 112B on website1 and website2, respectively. The user may click on the link to website1. Website1 may download a web page to computer 130 that includes a link to a white paper. Website1 may include one or more web pages with CCM tags 110A that capture different events during the web session between website1 and computer 130. Website1 or another website may have downloaded a cookie onto a web browser operating on computer 130. The cookie may comprise an identifier X, such as a unique alphanumeric set of characters associated with the web browser on computer 130.

During the web session with website1, the user of computer 130 may click on a link to white paper 112A. In response to the mouse click, CCM tag 110A may download an event 108A to CCM 100. Event 108A may identify the cookie identifier X loaded on the web browser of computer 130. In addition, or alternatively, CCM tag 110A may capture a user name and/or email address entered into one or more web page fields during the web session. CCM tag 110 hashes the email address and includes the hashed email address in event 108A. Any identifier associated with the user is referred to generally as user X or user ID.

CCM tag 110A also may include a link in event 108A to the white paper downloaded from website1 to computer 130. For example, CCM tag 110A may capture the universal resource locator (URL) for white paper 112A. CCM tag 110A also may include an event type identifier in event 108A that identifies an action or activity associated with content 112A. For example, CCM tag 110A may insert an event type identifier into event 108A that indicates the user downloaded an electric document.

CCM tag 110A also may identify the launching platform for accessing content 112B. For example, CCM tag 110B may identify a link www.searchengine.com to the search engine used for accessing website1.

An event profiler 140 in CCM 100 forwards the URL identified in event 108A to a content analyzer 142. Content analyzer 142 generates a set of topics 136 associated with or suggested by white paper 112A. For example, topics 136 may include electric cars, cars, smart cars, electric batteries, etc. Each topic 136 may have an associated relevancy score indicating the relevancy of the topic in white paper 112A. Content analyzers that identify topics in documents are known to those skilled in the art and are therefore not described in further detail.

Event profiler 140 forwards the user ID, topics 136, event type, and any other data from event 108A to event processor 144. Event processor 144 may store personal information captured in event 108A in a personal database 148. For example, during the web session with website1, the user may have entered an employer company name into a web page form field. CCM tag 110A may copy the employer company name into event 108A. Alternatively, CCM 100 may identify the company name from a domain name of the user email address.

Event processor 144 may store other demographic information from event 108A in personal database 148, such as user job title, age, sex, geographic location (postal address), etc. In one example, some of the information in personal database 148 is hashed, such as the user ID and or any other personally identifiable information. Other information in personal database 148 may be anonymous to any specific user, such as company name and job title.

Event processor 144 builds a user intent vector 145 from topic vectors 136. Event processor 144 continuously updates user intent vector 145 based on other received events 108. For example, the search engine may display a second link to website2 in response to search query 132. User X may click on the second link and website2 may download a web page to computer 130 announcing the seminar on electric cars.

The web page downloaded by website2 also may include a CCM tag 110B. User X may register for the seminar during the web session with website2. CCM tag 110B may generate a second event 108B that includes the user ID: X, a URL link to the web page announcing the seminar, and an event type indicating the user registered for the electric car seminar advertised on the web page.

CCM tag 110B sends event 108B to CCM 100. Content analyzer 142 generates a second set of topics 136. Event 108B may contain additional personal information associated with user X. Event processor 144 may add the additional personal information to personal database 148.

Event processor 144 updates user intent vector 145 based on the second set of topics 136 identified for event 108B. Event processor 144 may add new topics to user intent vector 145 or may change the relevancy scores for existing topics. For example, topics identified in both event 108A and 108B may be assigned higher relevancy scores. Event processor 144 also may adjust relevancy scores based on the associated event type identified in events 108.

Publisher 118 may submit a search query 154 to CCM 100 via a user interface 152 on a computer 155. For example, search query 154 may ask WHO IS INTERESTED IN BUYING ELECTRIC CARS? A transporter 150 in CCM 100 searches user intent vectors 145 for electric car topics with high relevancy scores. Transporter 150 may identify user intent vector 145 for user X. Transporter 150 identifies user X and other users A, B, and C interested in electric cars in search results 156.

As mentioned above, the user IDs may be hashed and CCM 100 may not know the actual identities of users X, A, B, and C. CCM 100 may provide a segment of hashed user IDs X, A, B, and C to publisher 118 in response to query 154.

Publisher 118 may have a contact list 120 of users (FIG. 1). Publisher 118 may hash email addresses in contact list 120 and compare the hashed identifiers with the encrypted or hashed user IDs X, A, B, and C. Publisher 118 identifies the unencrypted email address for matching user identifiers. Publisher 118 then sends information related to electric cars to the email addresses of the identified user segment. For example, publisher 118 may send emails containing white papers, advertisements, articles, announcements, seminar notifications, or the like, or any combination thereof.

CCM 100 may provide other information in response to search query 154. For example, event processor 144 may aggregate user intent vectors 145 for users employed by the same company Y into a company intent vector. The company intent vector for company Y may indicate a strong interest in electric cars. Accordingly, CCM 100 may identify company Y in search results 156. By aggregating user intent vectors 145, CCM 100 can identify the intent of a company or other category without disclosing any specific user personal information, e.g., without regarding a user's online browsing activity.

CCM 100 continuously receives events 108 for different third party content. Event processor 144 may aggregate events 108 for a particular time period, such as for a current day, for the past week, or for the past 30 days. Event processor 144 then may identify trending topics 158 within that particular time period. For example, event processor 144 may identify the topics with the highest average relevancy values over the last 30 days.

Different filters 159 may be applied to the intent data stored in event database 146. For example, filters 159 may direct event processor 144 to identify users in a particular company Y that are interested in electric cars. In another example, filters 159 may direct event processor 144 to identify companies with less than 200 employees that are interested in electric cars.

Filters 159 also may direct event processor 144 to identify users with a particular job title that are interested in electric cars or identify users in a particular city that are interested in electric cars. CCM 100 may use any demographic information in personal database 148 for filtering query 154.

CCM 100 monitors content accessed from multiple different third party websites. This allows CCM 100 to better identify the current intent for a wider variety of users, companies, or any other demographics. CCM 100 may use hashed and/or other anonymous identifiers to maintain user privacy. CCM 100 further maintains user anonymity by identifying the intent of generic user segments, such as companies, marketing groups, geographic locations, or any other user demographics.

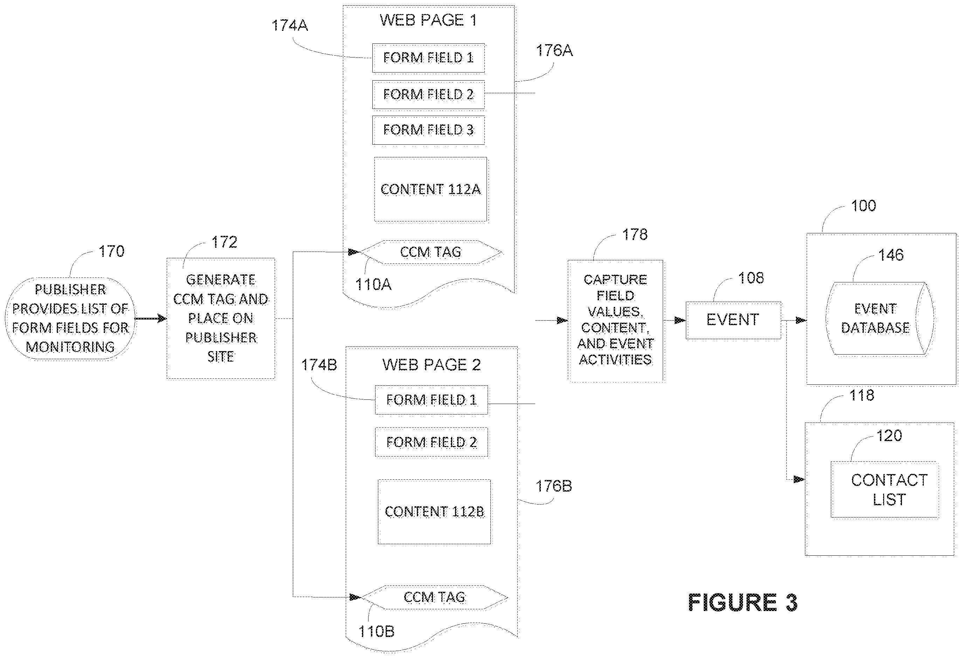

FIG. 3 depicts example operations performed by CCM tags. In operation 170, a publisher provides a list of form fields 174 for monitoring on web pages 176. In operation 172, CCM tags 110 are generated and loaded in web pages 176 on the publisher website. For example, CCM tag 110A is loaded onto a first web page 176A of the publisher website and a CCM tag 110B is loaded onto a second web page 176B of the publisher website. In one example, CCM tags 110 comprise JavaScript loaded into the web page document object model (DOM).

The publisher may download web pages 176, along with CCM tags 110, to user computers during web sessions. CCM tag 110A captures the data entered into some of form fields 174A and CCM tag 110B captures data entered into some of form fields 174B.

A user enters information into form fields 174A and 174B during the web session. For example, the user may enter an email address into one of form fields 174A during a user registration process. CCM tags 110 may capture the email address in operation 178, validate and hash the email address, and then send the hashed email address to CCM 100 in event 108.

CCM tags 100 may first confirm the email address includes a valid domain syntax and then use a hash algorithm to encode the valid email address string. CCM tags 110 also may capture other anonymous user identifiers, such as a cookie identifier. If no identifiers exist, CCM tag 110 may create a unique identifier.

CCM tags 110 may capture any information entered into fields 174. For example, CCM tags 110 also may capture user demographic data, such as company name, age, sex, postal address, etc. In one example, CCM tags 110 capture some the information for publisher contact list 120.

CCM tags 110 also may identify content 112 and associated event activities in operation 178. For example, CCM tag 110A may detect a user downloading a white paper 112A or registering for a seminar. CCM tag 110A captures the URL for white paper 112A and generates an event type identifier that identifies the event as a document download.

Depending on the application, CCM tag 110 in operation 178 sends the captured web session information in event 108 to publisher 118 or to CCM 100. For example, event 108 is sent to publisher 118 when CCM tag 110 is used for generating publisher contact list 120. Event 108 is sent to CCM 100 when CCM tag 110 is used for generating intent data.

CCM tags 110 may capture the web session information in response to the user leaving web page 176, existing one of form fields 174, selecting a submit icon, mousing out of one of form fields 174, a mouse click, an off focus, or any other user action. Note again that CCM 100 might never receive personally identifiable information (PII) since any PII data in event 108 is hashed by CCM tag 110.

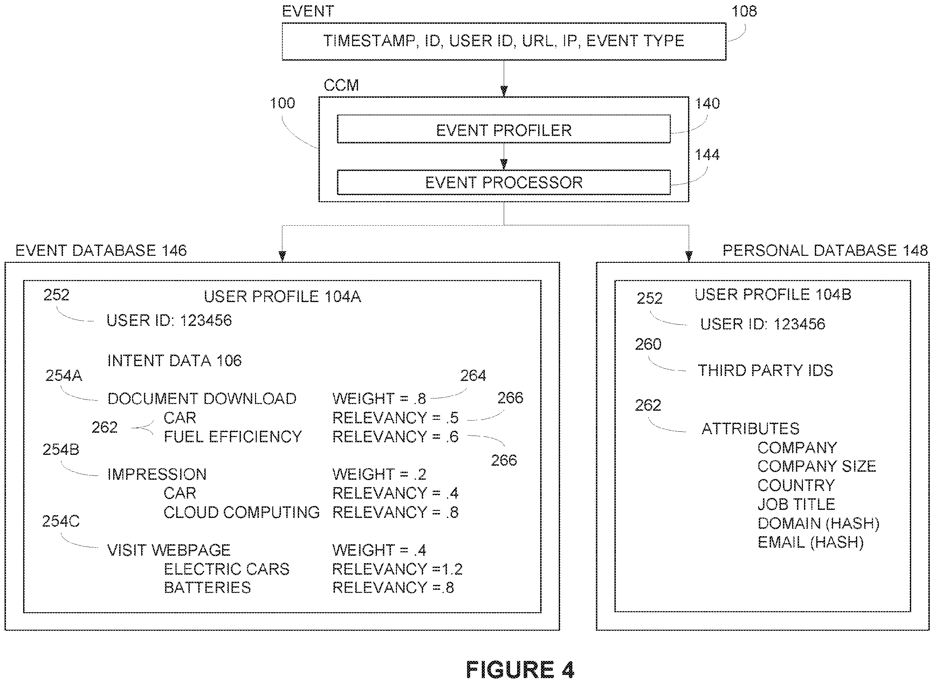

FIG. 4 is a diagram showing how the CCM generates intent data. A CCM tag may send a captured raw event 108 to CCM 100. For example, the CCM tag may send event 108 to CCM 100 in response to a user downloading a white paper. Event 108 may include a timestamp indicating when the white paper was downloaded, an identifier (ID) for event 108, a user ID associated with the user that downloaded the white paper, a URL for the downloaded white paper, and an IP address for the launching platform for the content. Event 108 also may include an event type indicating the user downloaded an electronic document.

Event profiler 140 and event processor 144 may generate intent data 106 from one or more events 108. Intent data 106 may be stored in a structured query language (SQL) database or non-SQL database. In one example, intent data 106 is stored in user profile 104A and includes a user ID 252 and associated event data 254.

Event data 254A is associated with a user downloading a white paper. Event profiler 140 identifies a car topic 262 and a fuel efficiency topic 262 in the white paper. Event profiler 140 may assign a 0.5 relevancy value to the car topic and assign a 0.6 relevancy value to the fuel efficiency topic.

Event processor 144 may assign a weight value 264 to event data 254A. Event processor 144 may assign larger a weight value 264 to more assertive events, such as downloading the white paper. Event processor 144 may assign a smaller weight value 264 to less assertive events, such as viewing a web page. Event processor 144 may assign other weight values 264 for viewing or downloading different types of media, such as downloading a text, video, audio, electronic books, on-line magazines and newspapers, etc.

CCM 100 may receive a second event 108 for a second piece of content accessed by the same user. CCM 100 generates and stores event data 254B for the second event 108 in user profile 104A. Event profiler 140 may identify a first car topic with a relevancy value of 0.4 and identify a second cloud computing topic with a relevancy value of 0.8 for the content associated with event data 254B. Event processor 144 may assign a weight value of 0.2 to event data 254B.

CCM 100 may receive a third event 108 for a third piece of content accessed by the same user. CCM 100 generates and stores event data 254C for the third event 108 in user profile 104A. Event profiler 140 identifies a first topic associated with electric cars with a relevancy value of 1.2 and identifies a second topic associated with batteries with a relevancy value of 0.8. Event processor 144 may assign a weight value of 0.4 to event data 254C.

Event data 254 and associated weighting values 264 may provide a better indicator of user interests/intent. For example, a user may complete forms on a publisher website indicating an interest in cloud computing. However, CCM 100 may receive events 108 for third party content accessed by the same user. Events 108 may indicate the user downloaded a whitepaper discussing electric cars and registered for a seminar related to electric cars.

CCM 100 generates intent data 106 based on received events 108. Relevancy values 266 in combination with weighting values 264 may indicate the user is highly interested in electric cars. Even though the user indicated an interest in cloud computing on the publisher website, CCM 100 determined from the third party content that the user was actually more interested in electric cars.

CCM 100 may store other personal user information from events 108 in user profile 104B. For example, event processor 144 may store third party identifiers 260 and attributes 262 associated with user ID 252. Third party identifiers 260 may include user names or any other identifiers used by third parties for identifying user 252. Attributes 262 may include an employer company name, company size, country, job title, hashed domain name, and/or hashed email addresses associated with user ID 252. Attributes 262 may be combined from different events 108 received from different websites accessed by the user. CCM 100 also may obtain different demographic data in user profile 104 from third party data sources (whether sourced online or offline).

An aggregator may use user profile 104 to update and/or aggregate intent data for different segments, such as publisher contact lists, companies, job titles, etc. The aggregator also may create snapshots of intent data 106 for selected time periods.

Event processor 144 may generate intent data 106 for both known and unknown users. For example, the user may access a web page and enter an email address into a form field in the web page. A CCM tag captures and hashes the email address and associates the hashed email address with user ID 252.

The user may not enter an email address into a form field. Alternatively, the CCM tag may capture an anonymous cookie ID in event 108. Event processor 144 then associates the cookie ID with user identifier 252. The user may clear the cookie or access data on a different computer. Event processor 144 may generate a different user identifier 252 and new intent data 106 for the same user.

The cookie ID may be used to create a de-identified cookie data set. The de-identified cookie data set then may be integrated with ad platforms or used for identifying destinations for target advertising.

CCM 100 may separately analyze intent data 106 for the different anonymous user IDs. If the user ever fills out a form providing an email address, event processor then may reassociate the different intent data 106 with the same user identifier 252.

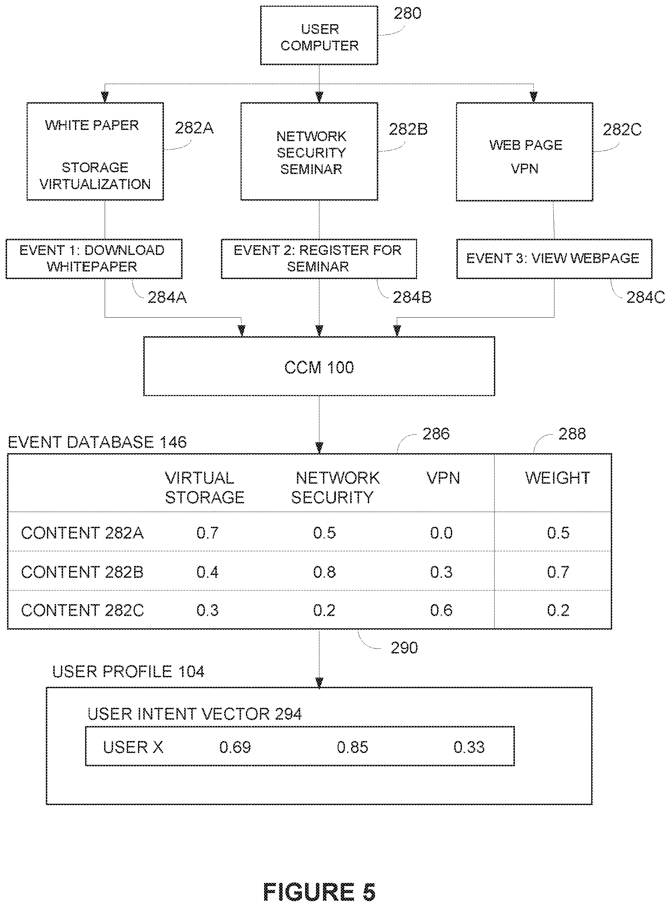

FIG. 5 depicts an example of how the CCM generates a user intent vector from the event data described above in FIG. 4. A user may use computer 280 to access different content 282. For example, the user may download a white paper 282A associated with storage virtualization, register for a network security seminar on a web page 282B, and view a web page article 282C related to virtual private networks (VPNs). Content 282A, 282B, and 282C may come from the same website or come from different websites.

The CCM tags discussed above capture three events 284A, 284B, and 284C associated with content 282A, 282B, and 282C, respectively. CCM 100 identifies topics 286 in content 282A, 282B, and/or 282C. Topics 286 include virtual storage, network security, and VPNs. CCM 100 assigns relevancy values 290 to topics 286 based on known algorithms. For example, relevancy values 290 may be assigned based on the number of times different associated key words are identified in content 282.

CCM 100 assigns weight values 288 to content 282 based on the associated event activity. For example, CCM 100 assigns a relatively high weight value of 0.7 to a more assertive off-line activity, such as registering for the network security seminar. CCM 100 assigns a relatively low weight value of 0.2 to a more passive on-line activity, such as viewing the VPN web page.

CCM 100 generates a user intent vector 294 in user profile 104 based on the relevancy values 290. For example, CCM 100 may multiply relevancy values 290 by the associated weight values 288. CCM 100 then may sum together the weighted relevancy values for the same topics to generate user intent vector 294.

CCM 100 uses intent vector 294 to represent a user, represent content accessed by the user, represent user access activities associated with the content, and effectively represent the intent/interests of the user. In another embodiment, CCM 100 may assign each topic in user intent vector 294 a binary score of 1 or 0. CCM 100 may use other techniques for deriving user intent vector 294. For example, CCM 100 may weigh the relevancy values based on timestamps.

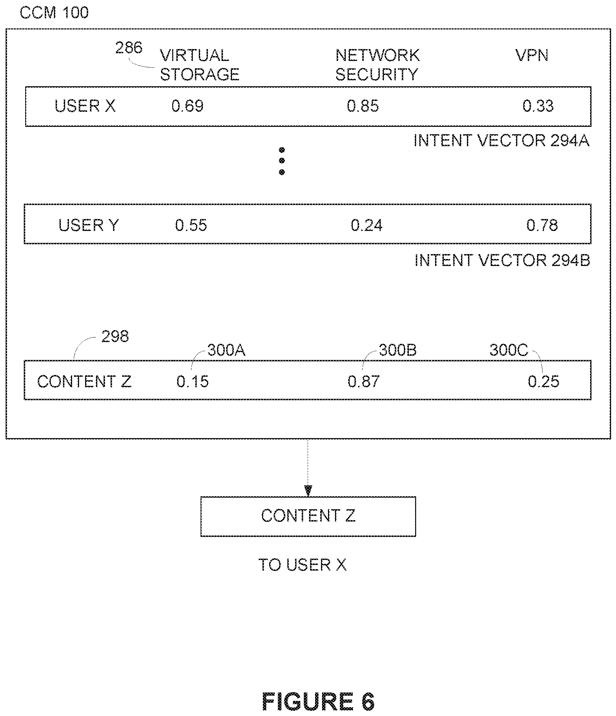

FIG. 6 depicts an example of how the CCM segments users. CCM 100 may generate user intent vectors 294A and 294B for two different users. A publisher may want to email content 298 to a segment of interested users. The publisher submits content 298 to CCM 100. CCM 100 identifies topics 286 and associated relevancy values 300 for content 298.

CCM 100 may use any variety of different algorithms to identify a segment of user intent vectors 294 associated with content 298. For example, relevancy value 300B indicates content 298 is primarily related to network security. CCM 100 may identify any user intent vectors 294 that include a network security topic with a relevancy value above a given threshold value.

In this example, assume the relevancy value threshold for the network security topic is 0.5. CCM 100 identifies user intent vector 294A as part of the segment of users satisfying the threshold value. Accordingly, CCM 100 sends the publisher of content 298 a contact segment that includes the user ID associated with user intent vector 294A. As mentioned above, the user ID may be a hashed email address, cookie ID, or some other encrypted or unencrypted identifier associated with the user.

In another example, CCM 100 calculates vector cross products between user intent vectors 294 and content 298. Any user intent vectors 294 that generate a cross product value above a given threshold value are identified by CCM 100 and sent to the publisher.

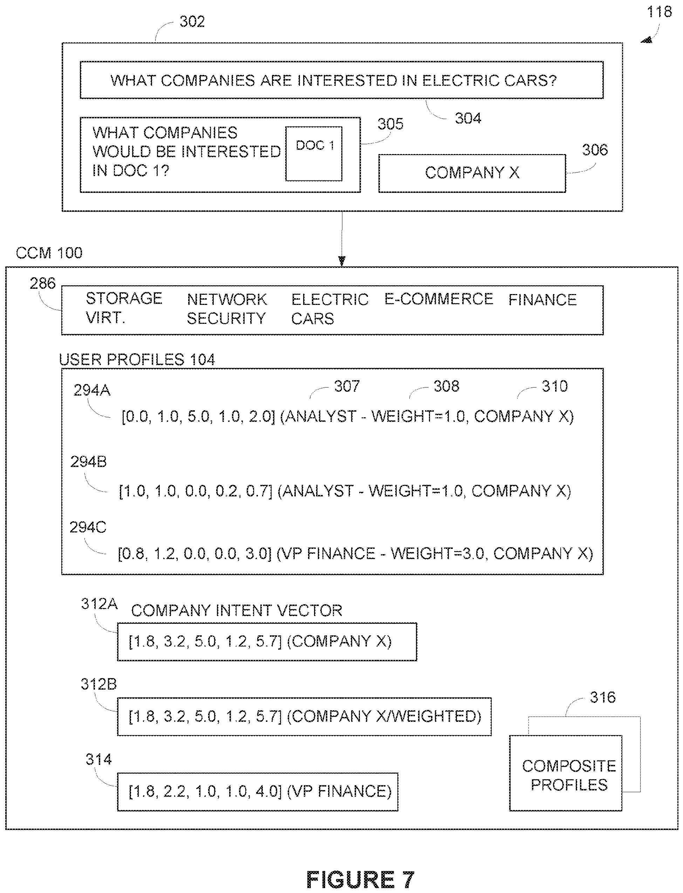

FIG. 7 depicts examples of how the CCM aggregates intent data. In this example, a publisher operating a computer 302 submits a search query 304 to CCM 100 asking what companies are interested in electric cars. In this example, CCM 100 associates five different topics 286 with user profiles 104. Topics 286 include storage virtualization, network security, electric cars, e-commerce, and finance.

CCM 100 generates user intent vectors 294 as described above in FIG. 6. User intent vectors 294 have associated personal information, such as a job title 307 and an employer company name 310. As explained above, users may provide personal information, such as employer name and job title in form fields when accessing a publisher or third party website.

The CCM tags described above capture and send the job title and employer name information to CCM 100. CCM 100 stores the job title and employer information in the associated user profile 104.

CCM 100 searches user profiles 104 and identifies three user intent vectors 294A, 294B, and 294C associated with the same employer name 310. CCM 100 determines that user intent vectors 294A and 294B are associated with a same job title of analyst and user intent vector 294C is associated with a job title of VP of finance.

In response to, or prior to, search query 304, CCM 100 generates a company intent vector 312A for company X. CCM 100 may generate company intent vector 312A by summing up the topic relevancy values for all of the user intent vectors 294 associated with company X.

In response to search query 304, CCM 100 identifies any company intent vectors 312 that include an electric car topic 286 with a relevancy value greater than a given threshold. For example, CCM 100 may identify any companies with relevancy values greater than 4.0. In this example, CCM 100 identifies company X in search results 306.

In one example, intent is identified for a company at a particular zip code, such as zip code 11201. CCM 100 may take customer supplied offline data, such as from a Customer Relationship Management (CRM) database, and identify the users that match the company and zip code 11201 to create a segment.

In another example, publisher 118 may enter a query 305 asking which companies are interested in a document (DOC 1) related to electric cars. Computer 302 submits query 305 and DOC 1 to CCM 100. CCM 100 generates a topic vector for DOC 1 and compares the DOC 1 topic vector with all known company intent vectors 312A.

CCM 100 may identify an electric car topic in the DOC 1 with high relevancy value and identify company intent vectors 312 with an electric car relevancy value above a given threshold. In another example, CCM 100 may perform a vector cross product between the DOC 1 topics and different company intent vectors 312. CCM 100 may identify the names of any companies with vector cross product values above a given threshold value and display the identified company names in search results 306.

CCM 100 may assign weight values 308 for different job titles. For example, an analyst may be assigned a weight value of 1.0 and a vice president (VP) may be assigned a weight value of 3.0. Weight values 308 may reflect purchasing authority associated with job titles 307. For example, a VP of finance may have higher authority for purchasing electric cars than an analyst. Weight values 308 may vary based on the relevance of the job title to the particular topic. For example, CCM 100 may assign an analyst a higher weight value 308 for research topics.

CCM 100 may generate a weighted company intent vector 312B based on weighting values 308. For example, CCM 100 may multiply the relevancy values for user intent vectors 294A and 294B by weighting value 1.0 and multiply the relevancy values for user intent vector 294C by weighting value 3.0. The weighted topic relevancy values for user intent vectors 294A, 294B, and 294C are then summed together to generate weighted company intent vector 312B.

CCM 100 may aggregate together intent vectors for other categories, such as job title. For example, CCM 100 may aggregate together all the user intent vectors 294 with VP of finance job titles into a VP of finance intent vector 314. Intent vector 314 identifies the topics of interest to VPs of finance.

CCM 100 also may perform searches based on job title or any other category. For example, publisher 118 may enter a query LIST VPs OF FINANCE INTERESTED IN ELECTRIC CARS? The CCM 100 identifies all of the user intent vectors 294 with associated VP finance job titles 307. CCM 100 then segments the group of user intent vectors 294 with electric car topic relevancy values above a given threshold value.

CCM 100 may generate composite profiles 316. Composite profiles 316 may contain specific information provided by a particular publisher or entity. For example, a first publisher may identify a user as VP of finance and a second publisher may identify the same user as VP of engineering. Composite profiles 316 may include other publisher provided information, such as company size, company location, company domain.

CCM 100 may use a first composite profile 316 when providing user segmentation for the first publisher. The first composite profile 316 may identify the user job title as VP of finance. CCM 100 may use a second composite profile 316 when providing user segmentation for the second publisher. The second composite profile 316 may identify the job title for the same user as VP of engineering. Composite profiles 316 are used in conjunction with user profiles 104 derived from other third party content.

In yet another example, CCM 100 may segment users based on event type. For example, CCM 100 may identify all the users that downloaded a particular article, or identify all of the users from a particular company that registered for a particular seminar.

Consumption Scoring

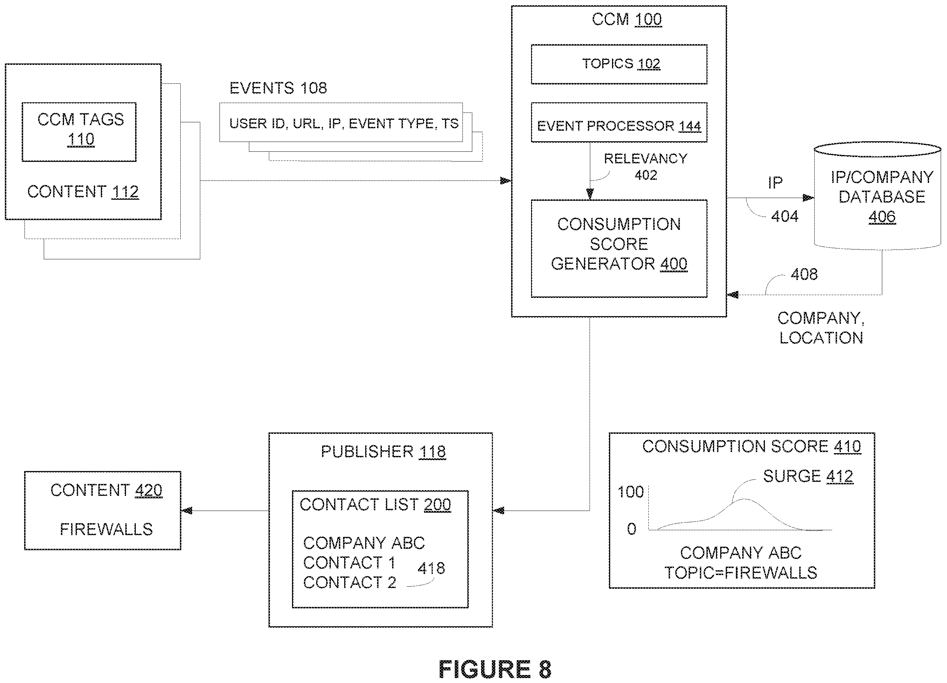

FIG. 8 depicts an example consumption score generator used in CCM 100. As explained above, CCM 100 may receive multiple events 108 associated with different content 112. For example, users may access web browsers, or any other application, to view content 112 on different websites. Content 112 may include any webpage, document, article, advertisement, or any other information viewable or audible by a user. For example, content 112 may include a webpage article or a document related to network firewalls.

CCM tag 110 may capture events 108 identifying content 112 accessed by a user during the web or application session. For example, events 108 may include a user identifier (USER ID), URL, IP address, event type, and time stamp (TS).

The user identifier may be a unique identifier CCM tag 110 generates for a specific user on a specific browser. The URL may be a link to content 112 accessed by the user during the web session. The IP address may be for a network device used by the user to access the Internet and content 112. As explained above, the event type may identify an action or activity associated with content 112. For example, the event type may indicate the user downloaded an electric document or displayed a webpage. The timestamp (TS) may identify a day and time the user accessed content 112.

Consumption score generator (CSG) 400 may access a IP/company database 406 to identify a company/entity and location 408 associated with IP address 404 in event 108. For example, existing services may provide databases 406 that identify the company and company address associated with IP addresses. The IP address and/or associated company or entity may be referred to generally as a domain. CSG 400 may generate metrics from events 108 for the different the companies 408 identified in database 406.

In another example, CCM tags 110 may include domain names in events 108. For example, a user may enter an email address into a web page field during a web session. CCM 100 may hash the email address or strip out the email domain address. CCM 100 may use the domain name to identify a particular company and location 408 from database 406.

As also described above, event processor 144 may generate relevancy scores 402 that indicate the relevancy of content 112 with different topics 102. For example, content 112 may include multiple words associate with topics 102. Event processor 144 may calculate relevancy scores 402 for content 112 based on the number and position words associated with a selected topic.

CSG 400 may calculate metrics from events 108 for particular companies 408. For example, CSG 400 may identify a group of events 108 for a current week that include the same IP address 404 associated with a same company and company location 408. CSG 400 may calculate a consumption score 410 for company 408 based on an average relevancy score 402 for the group of events 108. CSG 400 also may adjust the consumption score 410 based on the number of events 108 and the number of unique users generating the events 108.

CSG 400 may generate consumption scores 410 for company 408 for a series of time periods. CSG 400 may identity a surge 412 in consumption scores 410 based on changes in consumption scores 410 over a series of time periods. For example, CSG 400 may identify surge 412 based on changes in content relevancy, number of unique users, and number of events over several weeks. It has been discovered that surge 412 may correspond with a unique period when companies have heightened interest in a particular topic and are more likely to engage in direct solicitations related to that topic.

CCM 100 may send consumption scores 410 and/or any surge indicators 412 to publisher 118. Publisher 118 may store a contact list 200 that includes contacts 418 for company ABC. For example, contact list 200 may include email addresses or phone number for employees of company ABC. Publisher 118 may obtain contact list 200 from any source such as from a customer relationship management (CRM) system, commercial contact lists, personal contacts, third parties lead services, retail outlets, promotions or points of sale, or the like or any combination thereof.

In one example, CCM 100 may send weekly consumption scores 410 to publisher 118. In another example, publisher 118 may have CCM 100 only send surge notices 412 for companies on list 200 surging for particular topics 102.

Publisher 118 may send content 420 related to surge topics to contacts 418. For example, publisher 118 may send email advertisements, literature, or banner ads related to a firewalls to contacts 418. Alternatively, publisher 118 may call or send direct mailings regarding firewalls to contacts 418. Since CCM 100 identified surge 412 for a firewall topic at company ABC, contacts 418 at company ABC are more likely to be interested in reading and/or responding to content 420 related to firewalls. Thus, content 420 is more likely to have a higher impact and conversion rate when sent to contacts 418 of company ABC during surge 412.

In another example, publisher 118 may sell a particular product, such as firewalls. Publisher 118 may have a list of contacts 418 at company ABC known to be involved with purchasing firewall equipment. For example, contacts 418 may include the chief technology officer (CTO) and information technology (IT) manager at company ABC. CCM 100 may send publisher 118 a notification whenever a surge 412 is detected for firewalls at company ABC. Publisher 118 then may automatically send content 420 to specific contacts 418 at company ABC with job titles most likely to be interested in firewalls.

CCM 100 also may use consumption scores 410 for advertising verification. For example, CCM 100 may compare consumption scores 410 with advertising content 420 sent to companies or individuals. Advertising content 420 with a particular topic sent to companies or individuals with a high consumption score or surge for that same topic may receive higher advertising rates.

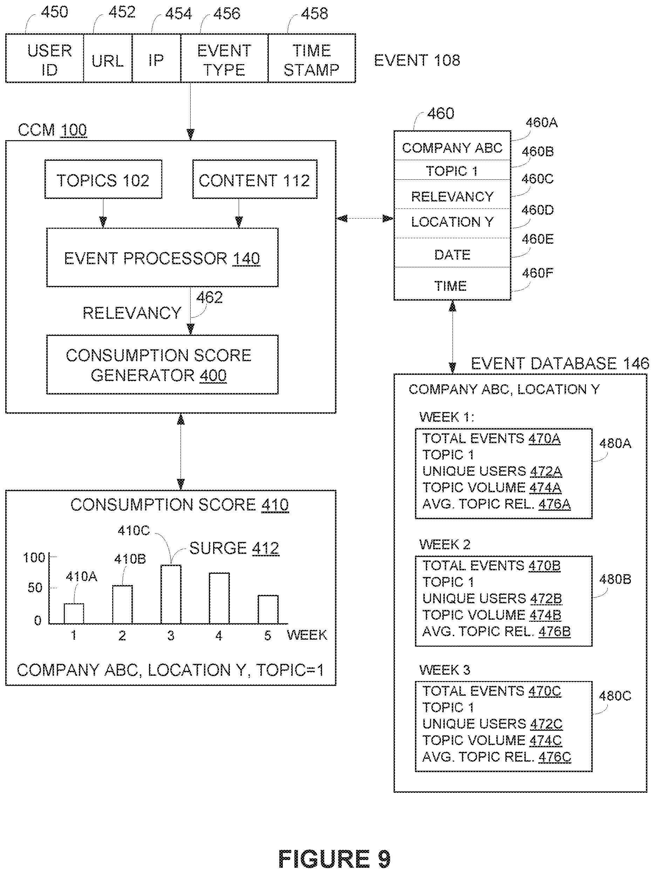

FIG. 9 shows in more detail how CCM 100 generates consumption scores 410. CCM 100 may receive millions of events from millions of different users associated with thousands of different domains every day. CCM 100 may accumulate the events 108 for different time periods, such as for each week. Week time periods are just one example and CCM 100 may accumulate events 108 for any selectable time period. CCM 100 also may store a set of topics 102 for any selectable subject matter. CCM 100 also may dynamically generate some of topics 102 based on the content identified in events 108 as described above.

Events 108 as mentioned above may include a user ID 450, URL 452, IP address 454, event type 456, and time stamp 458. Event processor 140 may identify content 112 located at URL 542 and select one of topics 102 for comparing with content 112. Event processor 140 may generate an associated relevancy score 462 indicating the relevancy of content 112 to selected topic 102. Relevancy score 462 may alternatively be referred to as a topic score.

CSG 400 may generate consumption data 460 from events 108. For example, CSG 400 may identify a company 460A associated with IP address 454. CSG 400 also may calculate a relevancy score 460C between content 112 and the selected topic 460B. CSG 400 also may identify a location 460D for with company 460A and identify a date 460E and time 460F when event 108 was detected.

CSG 400 may generate consumption metrics 480 from consumption data 460. For example, CSG 400 may calculate a total number of events 470A associated with company 460A (company ABC) and location 460D (location Y) for all topics during a first time period, such as for a first week. CSG 400 also may calculate the number of unique users 472A generating the events 108 associated with company ABC and topic 460B for the first week. CSG 400 may calculate for the first week a total number of events generated by company ABC for topic 460B (topic volume 474A). CSG 400 also may calculate an average topic relevancy 476A for the content accessed by company ABC and associated with topic 460B. CSG 400 may generate consumption metrics 480A-480C for sequential time periods, such as for three consecutive weeks.

CSG 400 may generate consumption scores 410 based on consumption metrics 480A-480C. For example, CSG 400 may generate a first consumption score 410A for week 1 and generate a second consumption score 410B for week 2 based in part on changes between consumption metrics 480A for week 1 and consumption metrics 480B for week 2. CSG 400 may generate a third consumption score 410C for week 3 based in part on changes between consumption metrics 480A, 480B, and 480C for weeks 1, 2, and 3, respectively. In one example, any consumption score 410 above as threshold value is identified as a surge 412.

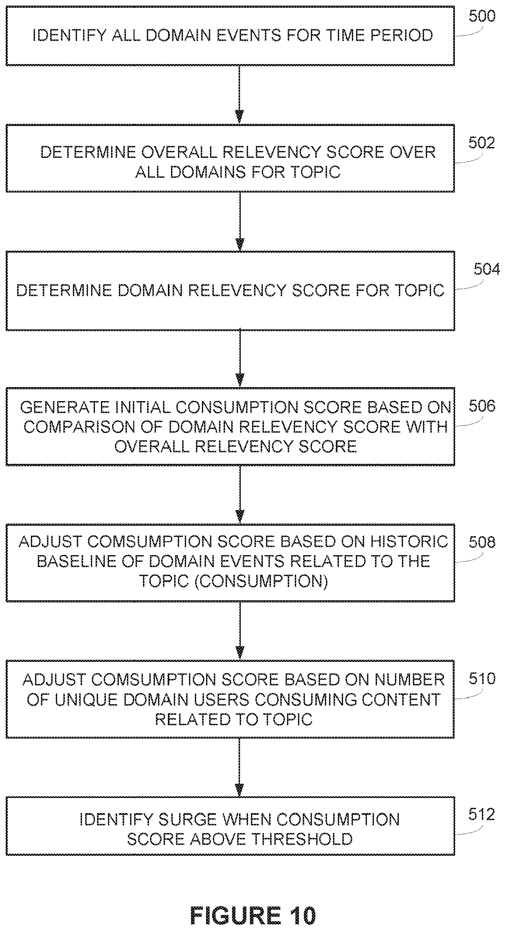

FIG. 10 depicts a process for identifying a surge in consumption scores. In operation 500, the CCM may identify all domain events for a given time period. For example, for a current week the CCM may accumulate all of the events for every IP address (domain) associated with every topic.

The CCM may use thresholds to select which domains to generate consumption scores. For example, for the current week the CCM may count the total number of events for a particular domain (domain level event count (DEC)) and count the total number of events for the domain at a particular location (metro level event count (DMEC)).

The CCM may calculate the consumption score for domains with a number of events more than a threshold (DEC > threshold). The threshold can vary based on the number of domains and the number of events. The CCM may use the second DMEC threshold to determine when to generate separate consumption scores for different domain locations. For example, the CCM may separate subgroups of company ABC events for the cities of Atlanta, New York, and Los Angeles that have each a number events DMEC above the second threshold.

In operation 502, the CCM may determine an overall relevancy score for all selected domains for each of the topics. For example, the CCM for the current week may calculate an overall average relevancy score for all domain events associated with the firewall topic.

In operation 504, the CCM may determine a relevancy score for a specific domain. For example, the CCM may identify a group of events having a same IP address associated with company ABC. The CCM may calculate an average domain relevancy score for the company ABC events associated with the firewall topic.

In operation 506, the CCM may generate an initial consumption score based on a comparison of the domain relevancy score with the overall relevancy score. For example, the CCM may assign an initial low consumption score when the domain relevancy score is a certain amount less than the overall relevancy score. The CCM may assign an initial medium consumption score larger than the low consumption score when the domain relevancy score is around the same value as the overall relevancy score. The CCM may assign an initial high consumption score larger than the medium consumption score when the domain relevancy score is a certain amount greater than the overall relevancy score. This is just one example, and the CCM may use any other type of comparison to determine the initial consumption scores for a domain/topic.

In operation 508, the CCM may adjust the consumption score based on a historic baseline of domain events related to the topic. This is alternatively referred to as consumption. For example, the CCM may calculate the number of domain events for company ABC associated with the firewall topic for several previous weeks.

The CCM may reduce the current week consumption score based on changes in the number of domain events over the previous weeks. For example, the CCM may reduce the initial consumption score when the number domain events fall in the current week and may not reduce the initial consumption score when the number of domain events rises in the current week.

In operation 510, the CCM may further adjust the consumption score based on the number of unique users consuming content associated with the topic. For example, the CCM for the current week may count the number of unique user IDs (unique users) for company ABC events associated with firewalls. The CCM may not reduce the initial consumption score when the number of unique users for firewall events increases from the prior week and may reduce the initial consumption score when the number of unique users drops from the previous week.

In operation 512, the CCM may identify surges based on the adjusted weekly consumption score. For example, the CCM may identify a surge when the adjusted consumption score is above a threshold.

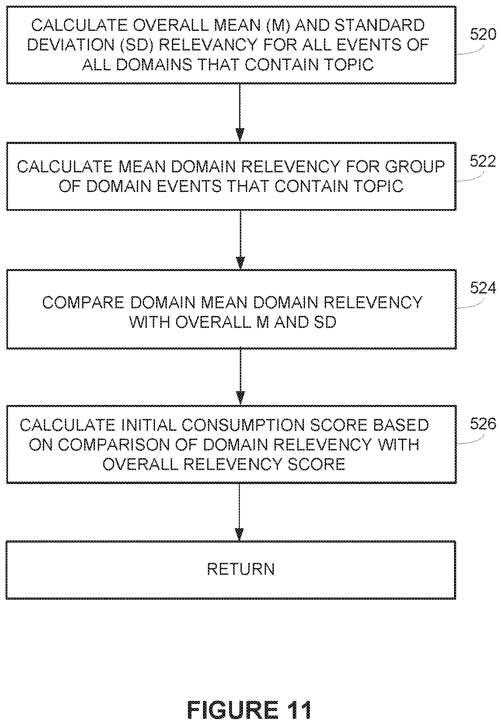

FIG. 11 depicts in more detail the process for generating an initial consumption score. It should be understood this is just one example scheme and a variety of other schemes also may be used.

In operation 520, the CCM may calculate an arithmetic mean (M) and standard deviation (SD) for each topic over all domains. The CCM may calculate M and SD either for all events for all domains that contain the topic, or alternatively for some representative (big enough) subset of the events that contain the topic. The CCM may calculate the overall mean and standard deviation as follows:

$$\text{Mean: } M = \frac{1}{n} * \sum_{i=1}^{n} x_i$$

$$\text{Standard deviation: } SD = \sqrt{\frac{1}{n-1} \sum_{i=1}^{n}(x_i - M)^2}$$

Where $x_i$ is a topic relevancy and n is a total number of events.

In operation 522, the CCM may calculate a mean (average) domain relevancy for each group of domain and/or domain/metro events for each topic. For example, for the past week the CCM may calculate the average relevancy for company ABC events for firewalls.

In operation 524, the CCM may compare the domain mean relevancy with the overall mean (M) relevancy and over standard deviation (SD) relevancy for all domains. For example, the CMM may assign three different levels to the domain mean relevancy (DMR).

| | | |
|---|---|---|
| Low: | DMR < M - 0.5 * SD | ~ 33% of all values |
| Medium: | M - 0.5 * SD < DMR < M + 0.5 * SD | ~ 33% of all values |
| High: | DMR > M + 0.5 * SD | ~ 33% of all values |

In operation 526, the CCM may calculate an initial consumption score for the domain/topic based on the above relevancy levels. For example, for the current week the CCM may assign one of the following initial consumption scores to the company ABC firewall topic. Again, this just one example of how the CCM may assign an initial consumption score to a domain/topic.

$$\text{Relevancy} = \text{High: initial consumption score} = 100$$

$$\text{Relevancy} = \text{Medium: Initial consumption score} = 70$$

$$\text{Relevancy} = \text{Low: Initial consumption score } 40.$$

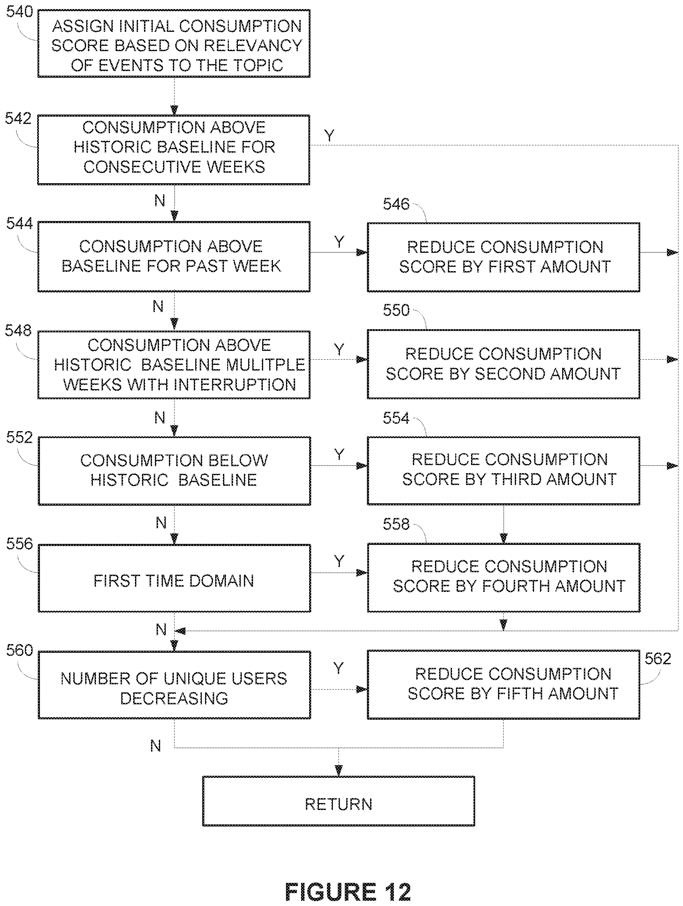

FIG. 12 depicts one example of how the CCM may adjust the initial consumption score. These are also just examples and the CCM may use other schemes for calculating a final consumption score. In operation 540, the CCM may assign an initial consumption score to the domain/location/topic as described above in FIG. 11.

The CCM may calculate a number of events for domain/location/topic for a current week. The number of events is alternatively referred to as consumption. The CCM also may calculate the number of domain/location/topic events for previous weeks and adjust the initial consumption score based on the comparison of current week consumption with consumption for previous weeks.

In operation 542, the CCM may determine if consumption for the current week is above historic baseline consumption for previous consecutive weeks. For example, the CCM may determine is the number of domain/location/topic events for the current week is higher than an average number of domain/location/topic events for at least the previous two weeks. If so, the CCM may not reduce the initial consumption value derived in FIG. 11.

If the current consumption is not higher than the average consumption in operation 542, the CCM in operation 544 may determine if the current consumption is above a historic baseline for the previous week. For example, the CCM may determine if the number of domain/location/topic events for current week is higher than the average number of domain/location/topic events for the previous week. If so, the CCM in operation 546 may reduce the initial consumption score by a first amount.

If the current consumption is not above than the previous week consumption in operation 544, the CCM in operation 548 may determine if the current consumption is above the historic consumption baseline but with interruption. For example, the CCM may determine if the number of domain/location/topic events has fallen and then risen over recent weeks. If so, the CCM in operation 550 may reduce the initial consumption score by a second amount.

If the current consumption is not above than the historic interrupted baseline in operation 548, the CCM in operation 552 may determine if the consumption is below the historic consumption baseline. For example, the CCM may determine if the current number of domain/location/topic events is lower than the previous week. If so, the CCM in operation 554 may reduce the initial consumption score by a third amount.

If the current consumption is above the historic base line in operation 552, the CCM in operation 556 may determine if the consumption is for a first time domain. For example, the CCM may determine the consumption score is being calculated for a new company or for a company that did not previously have enough events to qualify for calculating a consumption score. If so, the CCM in operation 558 may reduce the initial consumption score by a fourth amount.

In one example, the CCM may reduce the initial consumption score by the following amounts. This of course is just an example and the CCM may use any values and factors to adjust the consumption score.

Consumption above historic baseline consecutive weeks (operation 542). - 0

Consumption above historic baseline past week (operation 544). - 20 (first amount).

Consumption above historic baseline for multiple weeks with interruption (operation 548) - 30 (second amount).

Consumption below historic baseline (operation 552). - 40 (third amount).

First time domain (domain/metro) observed (operation 556). - 30 (fourth amount).

As explained above, the CCM also may adjust the initial consumption score based on the number of unique users. The CCM tags 110 in FIG. 8 may include cookies placed in web browsers that have unique identifiers. The cookies may assign the unique identifiers to the events captured on the web browser. Therefore, each unique identifier may generally represent a web browser for a unique user. The CCM may identify the number of unique identifiers for the domain/location/topic as the number of unique users. The number of unique users may provide an indication of the number of different domain users interested in the topic.

In operation 560, the CCM may compare the number of unique users for the domain/location/topic for the current week with the number of unique users for the previous week. The CCM may not reduce the consumption score if the number of unique users increases over the previous week. When the number of unique users decrease, the CCM in operation 562 may further reduce the consumption score by a fifth amount. For example, the CCM may reduce the consumption score by 10.

The CCM may normalize the consumption score for slower event days, such as weekends. Again, the CCM may use different time periods for generating the consumption scores, such as each month, week, day, hour, etc. The consumption scores above a threshold are identified as a surge or spike and may represent a velocity or acceleration in the interest of a company or individual in a particular topic. The surge may indicate the company or individual is more likely to engage with a publisher who presents content similar to the surge topic.

Consumption DNA

One advantage of domain based surge detection is that a surge can be identified for a company without using personally identifiable information (PII) of the company employees. The CCM derives the surge data based on a company IP address without using PII associated with the users generating the events.

In another example, the user may provide PII information during web sessions. For example, the user may agree to enter their email address into a form prior to accessing content. As described above, the CCM may hash the PII information and include the encrypted PII information either with company consumption scores or with individual consumption scores.

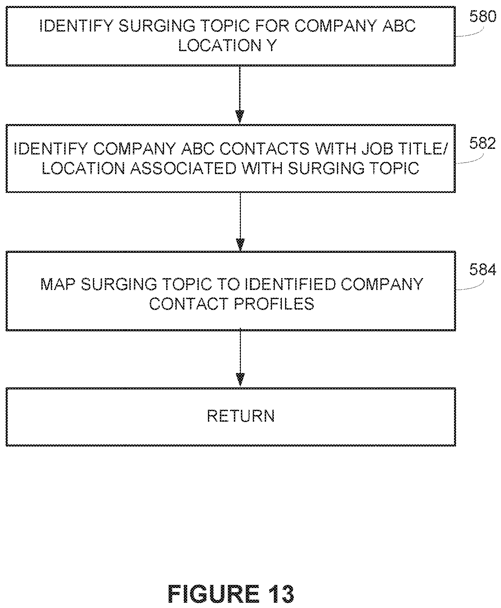

FIG. 13 shows one example process for mapping domain consumption data to individuals. In operation 580, the CCM may identify a surging topic for company ABC at location Y as described above. For example, the CCM may identify a surge for company ABC in New York for firewalls.

In operation 582, the CCM may identify users associated with company ABC. As mentioned above, some employees at company ABC may have entered personal contact information, including their office location\ and/or job titles into fields of web pages during events 108. In another example, a publisher or other party may obtain contact information for employees of company ABC from CRM customer profiles or third party lists.

Either way, the CCM or publisher may obtain a list of employees/users associated with company ABC at location Y. The list also may include job titles and locations for some of the employees/users. The CCM or publisher may compare the surge topic with the employee job titles. For example, the CCM or publisher may determine that the surging firewall topic is mostly relevant to users with a job title such as engineer, chief technical officer (CTO), or information technology (IT).

In operation 584, the CCM or publisher maps the surging firewall topic to profiles of the identified employees of company ABC. In another example, the CCM or publisher may not be as discretionary and map the firewall surge to any user associated with company ABC. The CCM or publisher then may direct content associated with the surging topic to the identified users. For example, the publisher may direct banner ads or emails for firewall seminars, products, and/or services to the identified users.

Consumption data identified for individual users is alternatively referred to as Dino DNA and the general domain consumption data is alternatively referred to as frog DNA. Associating domain consumption and surge data with individual users associated with the domain may increase conversion rates by providing more direct contact to users more likely interested in the topic.

Intent Measurement

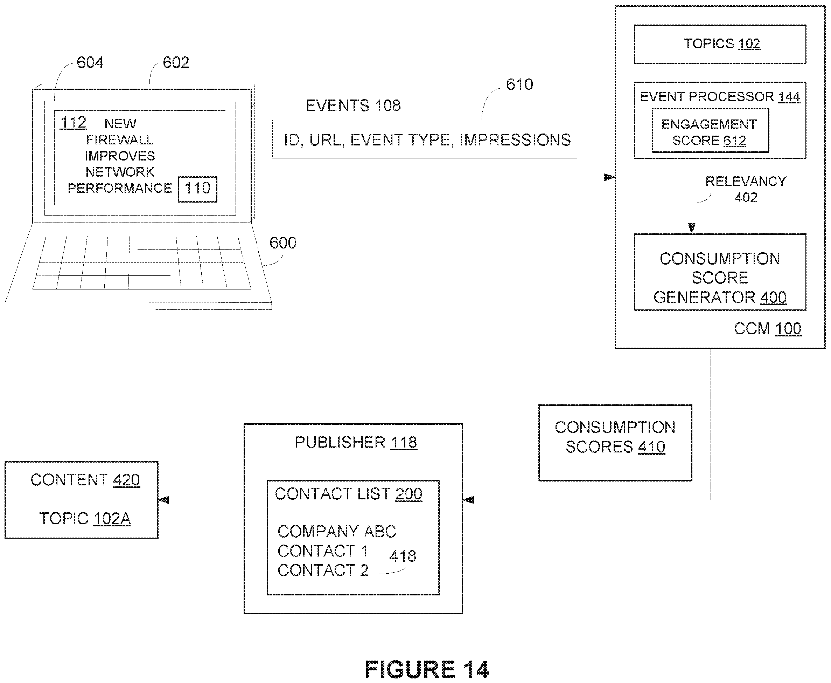

FIG. 14 depicts how CCM 100 may calculate consumption scores based on user engagement. A computer 600 may comprise a laptop, smart phone, tablet or any other device for accessing content 112. In this example, a user may open a web browser 604 on a screen 602 of computer 600. CCM tag 110 may operate within web browser 604 and monitor user web sessions. As explained above, CCM tag 110 may generate events 108 for the web session that include an identifier (ID), a URL for content 112, and an event type that identifies an action or activity associated with content 112. For example, CCM tag 110 may add an event type identifier into event 108 indicating the user downloaded an electric document.

In one example, CCM tag 110 also may generate a set of impressions 610 indicating actions taken by the user while viewing content 112. For example, impressions 610 may indicate how long the user dwelled on content 112 and/or how the user scrolled through content 112. Impressions 610 may indicate a level of engagement or interest the user has in content 112. For example, the user may spend more time on the web page and scroll through web page at a slower speed when the user is more interested in the content 112.

CCM 100 may calculate an engagement score 612 for content 112 based on impressions 610. CCM 100 may use engagement score 612 to adjust a relevancy score 402 for content 112. For example, CCM 100 may calculate a larger engagement score 612 when the user spends a larger amount of time carefully paging through content 112. CCM 100 then may increase relevancy score 402 of content 112 based on the larger engagement score 612. CSG 400 may adjust consumption scores 410 based on the increased relevancy 402 to more accurately identify domain surge topics. For example, a larger engagement score 612 may produce a larger relevancy 402 that produces a larger consumption score 410.

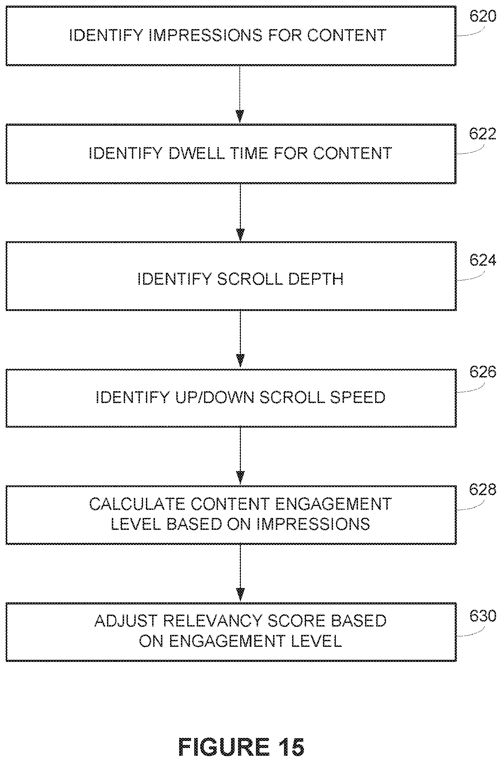

FIG. 15 depicts an example process for calculating the engagement score for content. In operation 620, the CCM may receive events that include content impressions. For example, the impressions may indicate any user interaction with content including tab selections that switch to different pages, page movements, mouse page scrolls, mouse clicks, mouse movements, scroll bar page scrolls, keyboard page movements, touch screen page scrolls, or any other content movement or content display indicator.

In operation 622, the CCM may identify the content dwell time. The dwell time may indicate how long the user actively views a page of content. In one example, tag 110 may stop a dwell time counter when the user changes page tabs or becomes inactive on a page. Tag 110 may start the dwell time counter again when the user starts scrolling with a mouse or starts tabbing.

In operation 624, the CCM may identify from the events a scroll depth for the content. For example, the CCM may determine how much of a page the user scrolled through or reviewed. In one example, the CCM tag or CCM may convert a pixel count on the screen into a percentage of the page.

In operation 626, the CCM may identify an up/down scroll speed. For example, dragging a scroll bar may correspond with a fast scroll speed and indicate the user has less interest in the content. Using a mouse wheel to scroll through content may correspond with a slower scroll speed and indicate the user is more interested in the content.

The CCM may assign higher values to impressions that indicate a higher user interest and assign lower values to impressions that indicate lower user interest. For example, the CCM may assign a larger value in operation 622 when the user spends more time actively dwelling on a page and may assign a smaller value when the user spends less time actively dwelling on a page.

In operation 628, the CCM may calculate the content engagement score based on the values derived in operations 622-628. For example, the CCM may add together and normalize the different values derived in operations 622-628.

In operation 630, the CCM may adjust content relevancy values described above in FIGS. 1-7 based on the content engagement score. For example, the CCM may increase the relevancy value when the content has a high engagement score and decrease the relevancy for a lower engagement score.

CCM 100 or CCM tag 110 in FIG. 14 may adjust the values assigned in operations 622-626 based on the type of device 600 used for viewing the content. For example, the dwell times, scroll depths, and scroll speeds, may vary between smart phone, tablets, laptops and desktop computers. CCM 100 or tag 110 may normalize or scale the impression values so different devices provide similar relative user engagement results.

Hardware and Software

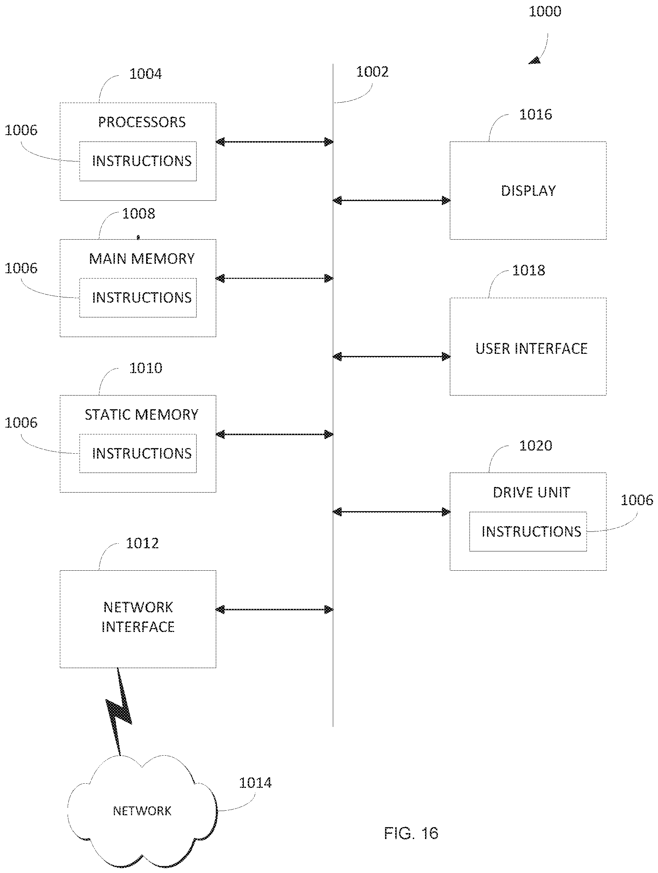

FIG. 16 shows a computing device 1000 that may be used for operating the content consumption monitor and performing any combination of processes discussed above. The computing device 1000 may operate in the capacity of a server or a client machine in a server-client network environment, or as a peer machine in a peer-to-peer (or distributed) network environment. In other examples, computing device 1000 may be a personal computer (PC), a tablet, a Personal Digital Assistant (PDA), a cellular telephone, a smart phone, a web appliance, or any other machine or device capable of executing instructions 1006 (sequential or otherwise) that specify actions to be taken by that machine.

While only a single computing device 1000 is shown, the computing device 1000 may include any collection of devices or circuitry that individually or jointly execute a set (or multiple sets) of instructions to perform any one or more of the operations discussed above. Computing device 1000 may be part of an integrated control system or system manager, or may be provided as a portable electronic device configured to interface with a networked system either locally or remotely via wireless transmission.

Processors 1004 may comprise a central processing unit (CPU), a graphics processing unit (GPU), programmable logic devices, dedicated processor systems, micro controllers, or microprocessors that may perform some or all of the operations described above. Processors 1004 may also include, but may not be limited to, an analog processor, a digital processor, a microprocessor, multi-core processor, processor array, network processor, etc.

Some of the operations described above may be implemented in software and other operations may be implemented in hardware. One or more of the operations, processes, or methods described herein may be performed by an apparatus, device, or system similar to those as described herein and with reference to the illustrated figures.

Processors 1004 may execute instructions or "code" 1006 stored in any one of memories 1008, 1010, or 1020. The memories may store data as well. Instructions 1006 and data can also be transmitted or received over a network 1014 via a network interface device 1012 utilizing any one of a number of well-known transfer protocols.

Memories 1008, 1010, and 1020 may be integrated together with processing device 1000, for example RAM or FLASH memory disposed within an integrated circuit microprocessor or the like. In other examples, the memory may comprise an independent device, such as an external disk drive, storage array, or any other storage devices used in database systems. The memory and processing devices may be operatively coupled together, or in communication with each other, for example by an I/O port, network connection, etc. such that the processing device may read a file stored on the memory.

Some memory may be "read only" by design (ROM) by virtue of permission settings, or not. Other examples of memory may include, but may be not limited to, WORM, EPROM, EEPROM, FLASH, etc. which may be implemented in solid state semiconductor devices. Other memories may comprise moving parts, such a conventional rotating disk drive. All such memories may be "machine-readable" in that they may be readable by a processing device.

"Computer-readable storage medium" (or alternatively, "machine-readable storage medium") may include all of the foregoing types of memory, as well as new technologies that may arise in the future, as long as they may be capable of storing digital information in the nature of a computer program or other data, at least temporarily, in such a manner that the stored information may be "read" by an appropriate processing device. The term "computer-readable" may not be limited to the historical usage of "computer" to imply a complete mainframe, mini-computer, desktop, wireless device, or even a laptop computer. Rather, "computer-readable" may comprise storage medium that may be readable by a processor, processing device, or any computing system. Such media may be any available media that may be locally and/or remotely accessible by a computer or processor, and may include volatile and non-volatile media, and removable and non-removable media.

Computing device 1000 can further include a video display 1016, such as a liquid crystal display (LCD) or a cathode ray tube (CRT)) and a user interface 1018, such as a keyboard, mouse, touch screen, etc. All of the components of computing device 1000 may be connected together via a bus 1002 and/or network.

For the sake of convenience, operations may be described as various interconnected or coupled functional blocks or diagrams. However, there may be cases where these functional blocks or diagrams may be equivalently aggregated into a single logic device, program or operation with unclear boundaries.

Having described and illustrated the principles of a preferred embodiment, it should be apparent that the embodiments may be modified in arrangement and detail without departing from such principles, the scope of which is defined by the accompanying claims.

**Claims**

1. A method, comprising:

    receiving network session events (108) from computer devices (130) that access webpages or content (112, 114, 124, 282A, 282B, and 282C) embedded in the webpages, the webpages or content including tags (110) configured to:

        monitor and capture the network session events (108) generated by the computer devices (130), and send the captured network session events (108) to a content consumption monitor, GGM, (100), and each of the network session events (108) at least indicating an accessed website or accessed content, an event type identifier that identifies an action or activity associated with of the accessed website or content, and a network address from which the accessed website or content was accessed;

    identifying the network session events (108) from a domain or domain name for a company (460A) associated with at least one network address (404) indicated by at least one of the network session events (108); identifying, for each of multiple time periods, a group of the network session events (108) including the domain name of the company (460A) or one or more network addresses (404) associated with the company; identifying, for each of the multiple time periods, a set of websites or content (114) accessed by members of the company (460A) as indicated by the group of the network session events (108); identifying one or more topics (102) based on various words in the set of websites or content; determining, by the CCM (100), an average relevancy score (402) of the set of websites or content (112) to each topic (102) of the one or more topics (102), the average relevancy score is an average of a set of relevancy scores of the set of websites or content to each topic, each of the plurality of relevancy scores being calculated based in part on a number of words in the set of websites or content that are associated with each topic (102) and event types performed on the set of websites or content as indicated by the group of the network session events (108); identifying a number of users (472A) generating the network session events (108) for each of the different time periods, the users (472A) being users of the computer devices (130); generating by a consumer score generator, CSG, (400) included in the CCM (100), consumption scores (410) for the company (460A) and each topic (102) based on the number of network session events (108), the number of users (472A) associated with the company (460A), and the average relevancy score (402) for each topic (102); and identifying by the CSG (400), a surge (412) in the consumption scores (410) for the company (460A) based on changes in the consumption scores (410) for the company over the multiple time periods where at least one of the consumption scores (410) above a threshold value is identified as the surge (412).

2. The method of claim 1, further comprising:

    comparing the average relevancy (402) with an overall relevancy for websites or content accessed from multiple different domains or from multiple computer devices (130) not associated with the company (460A); assigning a low initial value to the consumption score (410) when the relevancy (402) is below the overall relevancy; assigning a medium initial value to the consumption score (410) when the relevancy (402) is about the same as the overall relevancy; and assigning a high initial value to the consumption score (410) when the relevancy (402) is above the overall relevancy.

3. The method of claim 1 or 2, further comprising:

    identifying types of user engagement (612) with the content (112), in particular wherein the types of user engagement (612) include page dwell times and types of page scrolling; and adjusting the relevancy (402) of the content (112) based on the types of user engagement (612) with the content (112).

4. The method of any one of claims 1-3, further comprising:

calculating a first number of users generating a first number of the network session events (108) for a first time period;
calculating a second number of users generating a second number of the network session events (108) for a second time period; and
decreasing the consumption score (410) for the second time period when the second number of users is less than the first number of users.

5. The method of any one of claims 1-4, further comprising:

identifying the network session events (108) coming from an internet protocol (IP) address (404);
identifying a location (408) for the company associated with the IP address (404); and
associating the location (408) with the consumption score (410).

6. The method of any one of claims 1-5, further comprising:

identifying a first group of network session events (108) for a first time period;
identifying a first group of content (112) accessed during the first group of network session events (108);
identifying a first relevancy (402) of the first group of content (112) to the topic (102);
generating a first value for the consumption score (410) for the first time period based on a number of the first group of network session events (108) and the first relevancy (402);
identifying a second group of network session events (108) for a second time period after the first time period;
identifying a second group of content (112) accessed during the second group of network session events (108);
identifying a second relevancy (402) of the second group of content (112) to the topic (102); and
generating a second value for the consumption score (410) for the second time period based on a number of the second group of network session events (108) and the second relevancy (402);
in particular the method further comprising adjusting the second value based on a change between the number of the first group of network session events (108) and the number of the second group of network session events (108).

7. The method of any one of claims 1-6, the method further comprising:

identifying a third group of network session events (108) for a third time period after the second time period;
identifying a third group of content (112) accessed during the third group of network session events (108);
identifying a third relevancy of the third group of content (112) to the topic (102);
generating a third value for the consumption score (410) for the third time period based on a number of the third group of network session events (108) and the third relevancy (402), and
adjusting the third value based on changes between the number of the first group of network session events (108), the number of the second group of network session events (108), and the number of the third group of network session events (108).

8. The method of any one of claims 1-7, further comprising:

identifying a number of users generating the network session events (108) for the multiple time period; and
calculate the consumption scores (410) based on the number of users (472A).

9. The method of any one of claims 1-8, further comprising:

identifying the number of network session events (108) associated with the company (460A) and the topic (102) over a series of time periods; and
adjusting the consumption scores (410) based on changes in the number of network session events (108) over the series of time periods;
identifying a number of users (472A) generating the network session events (108) over the series of time periods; and
adjusting the consumption scores (410) based on changes in the number of users (472A) over the series of time periods.

10. The method of any one of claims 1-9, further comprising:

identifying a location (408) associated with the company (460A);
calculating the consumption scores (410) for the location (408) based on the average relevancy scores (402) and the number of network session events (108) associated with the location (408).

**11.** The method of any one of claims 1-9, further comprising:

mapping the surge (412) to contacts associated with the company (460A);, and
sending a notification of the surge (412) to a publisher (118).

**12.** The method of claim 11, wherein the notification of the surge (412) is configured to trigger the publisher (118) to send information associated with the one or more topics (102) to contacts associated with the company (460A).

**13.** The method of claim 11 or 12, wherein the notification of the surge (412) is configured to trigger the publisher (118) to send the information to the contacts having a job title associated with the topic (102).

**14.** A computer-readable storage medium (1008, 1010) configured to store instructions (1006), wherein execution of the instructions (1006) by one or more processors (1004) is operable to cause a computing device (1000) to perform all the steps of the method of any one of claims 1-13.

**15.** An apparatus, comprising:

a processing device (1004);
a memory device (1008, 1010) communicatively coupled to the processing device (1004), the memory device (1008, 1010) having instructions to implement all the steps of the method according to any one of claims 1-13.

**Patentansprüche**

**1.** Verfahren, das Folgendes umfasst:

Empfangen von Netzwerksitzungsereignissen (108) von Computervorrichtungen (130), die auf Webseiten oder in die Webseiten eingebetteten Inhalt (112, 114, 124, 282A, 282B und 282C) zugreifen, wobei die Webseiten oder der Inhalt Tags (110) aufweisen, die dazu eingerichtet sind:

die von den Computervorrichtungen (130) erzeugten Netzwerksitzungsereignisse (108) zu überwachen und zu erfassen und
die erfassten Netzwerksitzungsereignisse (108) an eine Inhaltsverbrauchsüberwachungsvorrichtung, CCM (Content Consumption Monitor) (100) zu senden, und
wobei jedes der Netzwerksitzungsereignisse (108) wenigstens eine aufgerufene Website oder einen aufgerufenen Inhalt, einen Ereignistypidentifikator, der eine der aufgerufenen Website oder dem aufgerufenen Inhalt zugeordnete Aktion oder Aktivität erkennt, und eine Netzwerkadresse angibt, von der aus auf die aufgerufene Website oder den aufgerufenen Inhalt zugegriffen wurde,

Identifizieren der Netzwerksitzungsereignisse (108) von einer Domäne oder einem Domänennamen für ein Unternehmen (460A), das wenigstens einer Netzwerkadresse (404) zugeordnet ist, die von wenigstens einem der Netzwerksitzungsereignisse (108) angegeben wird;
Identifizieren einer Gruppe der Netzwerksitzungsereignisse (108), die den Domänennamen des Unternehmens (460A) oder eine oder mehrere dem Unternehmen zugeordnete Netzwerkadressen (404) enthalten, für jeden von mehreren Zeiträumen;
Identifizieren einer Menge an Websites oder Inhalten (114), auf die von Angehörigen des Unternehmens (460A) zugegriffen wird, wie von der Gruppe der Netzwerksitzungsereignisse (108) angegeben, für jeden der mehreren Zeiträume;
Identifizieren eines Themas oder mehrerer Themen (102) auf der Grundlage verschiedener Wörter in der Menge der Websites oder Inhalten;
Ermitteln einer mittleren Relevanzbewertung (402) der Menge an Websites oder Inhalten (112) für jedes Thema (102) aus dem einen oder den mehreren Themen (102) durch die CCM (100), wobei die mittlere Relevanzbewertung ein Mittelwert einer Menge von Relevanzbewertungen der Menge von Websites oder Inhalten für jedes Thema ist, wobei jede der mehreren Relevanzbewertungen teilweise anhand einer Anzahl von Wörtern in der Menge der Websites oder Inhalten, die mit jedem Thema (102) in Verbindung gebracht werden, sowie Ereignistypen berechnet wird, die an der Menge von Websites oder Inhalten durchgeführt werden, wie von der Gruppe der Netzwerksitzungsereignisse (108) angegeben;

Identifizieren einer Anzahl von Nutzern (472A), die die Netzwerksitzungsereignisse (108) für jeden der verschiedenen Zeiträume erzeugen, wobei die Nutzer (472A) Nutzer der Computervorrichtungen (130) sind;

Erzeugen von Verbrauchsbewertungen (410) für das Unternehmen (460A) und jedes Thema (102) beruhend auf der Anzahl von Netzwerksitzungsereignissen (108), der Anzahl von Nutzern (472A), die dem Unternehmen (460A) zugeordnet sind, und der mittleren Relevanzbewertung (402) für jedes Thema (102) durch einen Verbraucherbewertungsgenerator, CSG (Consumer Score Generator) (400), der in der CCM (100) enthalten ist; und

Erkennen eines sprunghaften Anstiegs (412) bei den Verbrauchsbewertungen (410) für das Unternehmen (460A) durch den CSG (400) anhand von Änderungen der Verbrauchsbewertungen (410) für das Unternehmen über die mehreren Zeiträume, wobei wenigstens eine der Verbrauchsbewertungen (410) über einem Schwellenwert als der sprunghafte Anstieg (412) erkannt wird.

2. Verfahren nach Anspruch 1, das ferner Folgendes umfasst:

Vergleichen der mittleren Relevanz (402) mit einer Gesamtrelevanz für Websites oder Inhalte, auf die von mehreren verschiedenen Domains oder von mehreren Computervorrichtungen (130) aus zugegriffen wird, die nicht dem Unternehmen (460A) zugeordnet sind;

Zuweisen eines niedrigen Anfangswerts zu der Verbrauchsbewertung (410), wenn die Relevanz (402) unter der Gesamtrelevanz liegt;

Zuweisen eines mittleren Anfangswerts zu der Verbrauchsbewertung (410), wenn die Relevanz (402) etwa gleich der Gesamtrelevanz ist; und

Zuweisen eines hohen Anfangswerts zu der Verbrauchsbewertung (410), wenn die Relevanz (402) über der Gesamtrelevanz liegt.

3. Verfahren nach Anspruch 1 oder 2, das ferner Folgendes umfasst:

Identifizieren von Arten von Nutzerbindung bzw. -interaktion (612) mit dem Inhalt (112), insbesondere wobei zu den Arten von Nutzerbindung bzw. -interaktion (612) Seitenverweilzeiten und Arten des Scrollens von Seiten gehören; und

Anpassen der Relevanz (402) des Inhalts (112) anhand der Arten von Nutzerbindung bzw. -interaktion (612) mit dem Inhalt (112).

4. Verfahren nach einem der Ansprüche 1 - 3, das ferner Folgendes umfasst:

Berechnen einer ersten Anzahl von Nutzern, die eine erste Anzahl der Netzwerksitzungsereignisse (108) für einen ersten Zeitraum erzeugen;

Berechnen einer zweiten Anzahl von Nutzern, die eine zweite Anzahl der Netzwerksitzungsereignisse (108) für einen zweiten Zeitraum erzeugen; und

Herabsetzen der Verbrauchsbewertung (410) für den zweiten Zeitraum, wenn die zweite Anzahl von Nutzern geringer ist als die erste Anzahl von Nutzern.

5. Verfahren nach einem der Ansprüche 1 - 4, das ferner Folgendes umfasst:

Identifizieren der Netzwerksitzungsereignisse (108), die von einer Internetprotokolladresse (IP-Adresse) (404) stammen;

Identifizieren eines Standorts (408) für das mit der IP-Adresse (404) in Verbindung gebrachte Unternehmen; und

Zuordnen des Standorts (408) zu der Verbrauchsbewertung (410).

6. Verfahren nach einem der Ansprüche 1 - 5, das ferner Folgendes umfasst:

Identifizieren einer ersten Gruppe von Netzwerksitzungsereignissen (108) für einen ersten Zeitraum;

Identifizieren einer ersten Gruppe von Inhalten (112), auf die während der ersten Gruppe von Netzwerksitzungsereignissen (108) zugegriffen wird;

Identifizieren einer ersten Relevanz (402) der ersten Gruppe von Inhalten (112) für das Thema (102);

Erzeugen eines ersten Wertes für die Verbrauchsbewertung (410) für den ersten Zeitraum auf der Grundlage einer Anzahl der ersten Gruppe von Netzwerksitzungsereignissen (108) und der ersten Relevanz (402);

Identifizieren einer zweiten Gruppe von Netzwerksitzungsereignissen (108) für einen zweiten Zeitraum nach dem ersten Zeitraum;
Identifizieren einer zweiten Gruppe von Inhalten (112), auf die während der zweiten Gruppe von Netzwerksitzungsereignissen (108) zugegriffen wird;
Identifizieren einer zweiten Relevanz (402) der zweiten Gruppe von Inhalten (112) für das Thema (102); und
Erzeugen eines zweiten Wertes für die Verbrauchsbewertung (410) für den zweiten Zeitraum auf der Grundlage einer Anzahl der zweiten Gruppe von Netzwerksitzungsereignissen (108) und der zweiten Relevanz (402);
wobei das Verfahren insbesondere ferner das Anpassen des zweiten Wertes auf der Grundlage einer Änderung zwischen der Anzahl der ersten Gruppe von Netzwerksitzungsereignissen (108) und der Anzahl der zweiten Gruppe von Netzwerksitzungsereignissen (108) umfasst.

7. Verfahren nach einem der Ansprüche 1 - 6, wobei das Verfahren ferner Folgendes umfasst:

Identifizieren einer dritten Gruppe von Netzwerksitzungsereignissen (108) für einen dritten Zeitraum nach dem zweiten Zeitraum;
Identifizieren einer dritten Gruppe von Inhalten (112), auf die während der dritten Gruppe von Netzwerksitzungsereignissen (108) zugegriffen wird;
Identifizieren einer dritten Relevanz der dritten Gruppe von Inhalten (112) für das Thema (102);
Erzeugen eines dritten Wertes für die Verbrauchsbewertung (410) für den dritten Zeitraum auf der Grundlage einer Anzahl der dritten Gruppe von Netzwerksitzungsereignissen (108) und der dritten Relevanz (402), und
Anpassen des dritten Wertes auf der Grundlage von Änderungen zwischen der Anzahl der ersten Gruppe von Netzwerksitzungsereignissen (108), der Anzahl der zweiten Gruppe von Netzwerksitzungsereignissen (108) und der Anzahl der dritten Gruppe von Netzwerksitzungsereignissen (108).

8. Verfahren nach einem der Ansprüche 1 - 7, das ferner Folgendes umfasst:

Ermitteln einer Anzahl von Nutzern, die die Netzwerksitzungsereignisse (108) für die mehreren Zeiträume erzeugen; und
Berechnen der Verbrauchsbewertungen (410) anhand der Anzahl der Nutzer (472A).

9. Verfahren nach einem der Ansprüche 1 - 8, das ferner Folgendes umfasst:

Ermitteln der Anzahl von Netzwerksitzungsereignissen (108), die dem Unternehmen (460A) und dem Thema (102) über eine Reihe von Zeiträumen zugeordnet sind; und
Anpassen der Verbrauchsbewertungen (410) auf der Grundlage von Änderungen bei der Anzahl von Netzwerksitzungsereignissen (108) über die Reihe von Zeiträumen;
Ermitteln einer Anzahl von Nutzern (472A), die die Netzwerksitzungsereignisse (108) über die Reihe von Zeiträumen erzeugen; und
Anpassen der Verbrauchsbewertungen (410) anhand von Änderungen bei der Anzahl der Nutzer (472A) über die Reihe von Zeiträumen.

10. Verfahren nach einem der Ansprüche 1 - 9, das ferner Folgendes umfasst:

Identifizieren eines dem Unternehmen (460A) zugeordneten Standorts (408);
Berechnen der Verbrauchsbewertungen (410) für den Standort (408) anhand der mittleren Relevanzbewertungen (402) und der Anzahl der dem Standort (408) zugeordneten Netzwerksitzungsereignisse (108).

11. Verfahren nach einem der Ansprüche 1 - 9, das ferner Folgendes umfasst:

Abbilden des sprunghaften Anstiegs (412) auf Kontakte, die dem Unternehmen (460A) zugeordnet sind, und
Senden einer Benachrichtigung über den sprunghaften Anstieg (412) an einen Veröffentlicher (118).

12. Verfahren nach Anspruch 11, bei dem die Benachrichtigung über den sprunghaften Anstieg (412) so ausgeführt ist, dass sie den Veröffentlicher (118) veranlasst, Informationen, die mit dem einen oder den mehreren Themen (102) in Verbindung gebracht werden, an dem Unternehmen (460A) zugeordnete Kontakte zu senden.

13. Verfahren nach Anspruch 11 oder 12, bei dem die Benachrichtigung über den sprunghaften Anstieg (412) so ausgeführt ist, dass sie den Veröffentlicher (118) veranlasst, die Informationen an die Kontakte mit einer mit dem Thema (102) verbundenen Stellenbezeichnung zu senden.

14. Computerlesbares Speichermedium (1008, 1010), das zum Speichern von Anweisungen (1006) eingerichtet ist, wobei die Ausführung der Anweisungen (1006) durch einen oder mehrere Prozessoren (1004) so durchgeführt werden kann, dass eine Rechenvorrichtung (1000) veranlasst wird, alle Schritte des Verfahrens nach einem der Ansprüche 1 - 13 vorzunehmen.

15. Vorrichtung mit:

einer Verarbeitungsvorrichtung (1004);
einer Speichervorrichtung (1008, 1010), die zur Kommunikation mit der Verarbeitungsvorrichtung (1004) gekoppelt ist, wobei die Speichervorrichtung (1008, 1010) Anweisungen zur Durchführung aller Schritte des Verfahrens nach einem der Ansprüche 1 - 13 aufweist.

**Revendications**

1. Procédé, comprenant :

la réception d'événements de session de réseau (108) de dispositifs informatiques (130) qui ont accès à des pages Web ou à un contenu (112, 114, 124, 282A, 282B et 282C) incorporé dans les pages Web, les pages Web ou le contenu incluant des tags (110) réalisés de manière :

à surveiller et à saisir les événements de session de réseau (108) générés par les dispositifs informatiques (130), et
à envoyer les événements de session de réseau (108) saisis à un dispositif de surveillance de consommation de contenu, CCM (Content Consumption Monitor), (100), et
chacun des événements de session de réseau (108) indiquant au moins un site Web auquel il a été accédé ou un contenu auquel il a été accédé, un identificateur de type d'événement identifiant une action ou une activité associée au site Web ou au contenu auquel il a été accédé, et une adresse de réseau à partir de laquelle l'accès au site Web ou au contenu auquel il a été accédé est réalisé ;

l'identification des événements de session de réseau (108) à partir d'un domaine ou d'un nom de domaine pour une compagnie (460A) associée à au moins une adresse de réseau (404) indiquée par au moins l'un des événements de session de réseau (108) ;
l'identification, pour chacune parmi plusieurs périodes de temps, d'un groupe des événements de session de réseau (108) incluant le nom de domaine de la compagnie (460A) ou une ou plusieurs adresses de réseau (404) associées à la compagnie ;
l'identification, pour chacune parmi plusieurs périodes de temps, d'un ensemble de sites Web ou de contenu (114) auquel il a été accédé par des membres de la compagnie (460A) tel qu'indiqué par le groupe d'événements de session de réseau (108) ;
l'identification d'un ou de plusieurs sujets (102) sur la base de différents mots dans l'ensemble de sites Web ou de contenu ;
la détermination, par le CCM (100), d'un résultat de pertinence moyen (402) de l'ensemble de sites Web ou de contenu (112) pour chaque sujet (102) parmi ledit un ou lesdits plusieurs sujets (102), le résultat de pertinence moyen étant une moyenne d'un ensemble de résultats de pertinence de l'ensemble de sites Web ou de contenu pour chaque sujet, chacun des plusieurs résultats de pertinence étant calculé en partie sur la base d'un nombre de mots dans l'ensemble de sites Web ou de contenu associés à chaque sujet (102), et de types d'événements réalisés au niveau de l'ensemble de sites Web ou de contenu, tels qu'indiqués par le groupe des événements de session de réseau (108) ;
l'identification d'un nombre d'utilisateurs (472A) générant les événements de session de réseau (108) pour chacune des différentes périodes de temps, les utilisateurs (472A) étant des utilisateurs des dispositifs informatiques (130) ;
la génération, par un générateur de résultat de consommation, CSG (Consumer Score Generator), (400) inclus dans le CCM (100), de résultats de consommation (410) pour la compagnie (460A) et chaque sujet (102) sur la base du nombre d'événements de session de réseau (108), du nombre d'utilisateurs (472A) associés à la compagnie (460A), et du résultat de pertinence moyen (402) pour chaque sujet (102) ; et
l'identification, par le CSG (400), d'une hausse subite (412) au niveau des résultats de consommation (410) pour la compagnie (460A) sur la base de changements des résultats de consommation (410) pour la compagnie sur les plusieurs périodes de temps, au moins l'un des résultats de consommation (410) supérieur à une valeur seuil étant identifié comme hausse subite (412).

2. Procédé selon la revendication 1, comprenant en outre :

la comparaison de la pertinence moyenne (402) à une pertinence totale pour des sites Web ou un contenu auxquels/auquel il a été accédé depuis plusieurs domaines différents ou depuis plusieurs dispositifs informatiques (130) non associés à la compagnie (460A) ;
l'association d'une valeur initiale basse au résultat de consommation (410) lorsque la pertinence (402) est inférieure à la pertinence totale ;
l'association d'une valeur initiale moyenne au résultat de consommation (410) lorsque la pertinence (402) correspond environ à la pertinence totale ; et
l'association d'une valeur initiale élevée au résultat de consommation (410) lorsque la pertinence (402) est supérieure à la pertinence totale.

3. Procédé selon la revendication 1 ou 2, comprenant en outre :

l'identification de types d'implication d'utilisateur (612) avec le contenu (112), en particulier dans lequel les types d'implication d'utilisateur (612) incluent des temps d'arrêt de page et des types de défilement de page ; et
l'adaptation de la pertinence (402) du contenu (112) sur la base des types d'implication d'utilisateur (612) avec le contenu (112).

4. Procédé selon l'une des revendications 1 à 3, comprenant en outre :

le calcul d'un premier nombre d'utilisateurs générant un premier nombre des événements de session de réseau (108) pour une première période de temps ;
le calcul d'un deuxième nombre d'utilisateurs générant un deuxième nombre des événements de session de réseau (108) pour une deuxième période de temps ; et
la diminution du résultat de consommation (410) pour la deuxième période de temps lorsque le deuxième nombre d'utilisateurs est inférieur au premier nombre d'utilisateurs.

5. Procédé selon l'une des revendications 1 à 4, comprenant en outre :

l'identification d'événements de session de réseau (108) provenant d'une adresse Internet Protocol (adresse IP) (404) ;
l'identification d'un emplacement (408) pour la compagnie associée à l'adresse IP (404) ; et
l'association de l'emplacement (408) au résultat de consommation (410).

6. Procédé selon l'une des revendications 1 à 5, comprenant en outre :

l'identification d'un premier groupe d'événements de session de réseau (108) pour une première période de temps ;
l'identification d'un premier groupe de contenu (112) auquel il a été accédé durant le premier groupe d'événements de session de réseau (108) ;
l'identification d'une première pertinence (402) du premier groupe de contenu (112) pour le sujet (102) ;
la génération d'une première valeur pour le résultat de consommation (410) pour la première période de temps sur la base d'un nombre du premier groupe d'événements de session de réseau (108) et de la première pertinence (402) ;
l'identification d'un deuxième groupe d'événements de session de réseau (108) pour une deuxième période de temps après la première période de temps ;
l'identification d'un deuxième groupe de contenu (112) auquel il a été accédé durant le deuxième groupe d'événements de session de réseau (108) ;
l'identification d'une deuxième pertinence (402) du deuxième groupe de contenu (112) pour le sujet (102) ; et
la génération d'une deuxième valeur pour le résultat de consommation (410) pour la deuxième période de temps sur la base d'un nombre du deuxième groupe d'événements de session de réseau (108) et de la deuxième pertinence (402) ;
le procédé comprenant en outre en particulier l'adaptation de la deuxième valeur sur la base d'un changement entre le nombre du premier groupe d'événements de session de réseau (108) et le nombre du deuxième groupe d'événements de session de réseau (108).

7. Procédé selon l'une des revendications 1 à 6, le procédé comprenant en outre :

l'identification d'un troisième groupe d'événements de session de réseau (108) pour une troisième période de temps après la deuxième période de temps ;
l'identification d'un troisième groupe de contenu (112) auquel il a été accédé durant le troisième groupe d'événements de session de réseau (108) ;
l'identification d'une troisième pertinence du troisième groupe de contenu (112) pour le sujet (102) ;
la génération d'une troisième valeur pour le résultat de consommation (410) pour la troisième période de temps sur la base d'un nombre du troisième groupe d'événements de session de réseau (108) et de la troisième pertinence (402) ; et
l'adaptation de la troisième valeur sur la base de changements entre le nombre du premier groupe d'événements de session de réseau (108), le nombre du deuxième groupe d'événements de session de réseau (108) et le nombre du troisième groupe d'événements de session de réseau (108).

8. Procédé selon l'une des revendications 1 à 7, comprenant en outre :

l'identification d'un nombre d'utilisateurs générant les événements de session de réseau (108) pour les plusieurs périodes de temps ; et
la calcul des résultats de consommation (410) sur la base du nombre d'utilisateurs (472A).

9. Procédé selon l'une des revendications 1 à 8, comprenant en outre :

l'identification du nombre d'événements de session de réseau (108) associé à la compagnie (460A) et au sujet (102) sur une série de périodes de temps ; et
l'adaptation des résultats de consommation (410) sur la base de changements du nombre d'événements de session de réseau (108) sur la série de périodes de temps ;
l'identification d'un nombre d'utilisateurs (472A) générant les événements de session de réseau (108) sur la série de périodes de temps ; et
l'adaptation des résultats de consommation (410) sur la base de changements du nombre d'utilisateurs (472A) sur la série de périodes de temps.

10. Procédé selon l'une des revendications 1 à 9, comprenant en outre :

l'identification d'un emplacement (408) associé à la compagnie (460A) ;
le calcul des résultats de consommation (410) pour l'emplacement (408) sur la base des résultats de pertinence moyens (402) et du nombre d'événements de session de réseau (108) associés à l'emplacement (408).

11. Procédé selon l'une des revendications 1 à 9, comprenant en outre :

la représentation de la hausse subite (412) sur les contacts associés à la compagnie (460A) ; et
l'envoi d'une notification concernant la hausse subite (412) à un publicateur (118).

12. Procédé selon la revendication 11, dans lequel la notification concernant la hausse subite (412) est réalisée de manière à amener le publicateur (118) à envoyer des informations associées audit un ou auxdits plusieurs sujets (102) à des contacts associés à la compagnie (460A).

13. Procédé selon la revendication 11 ou 12, dans lequel la notification concernant la hausse subite (412) est réalisée de manière à amener le publicateur (118) à envoyer les informations aux contacts qui ont un titre de fonction associé au sujet (102).

14. Support d'enregistrement (1008, 1010) lisible par ordinateur, réalisé de manière à enregistrer des instructions (1006), l'exécution des instructions (1006) par un ou plusieurs processeurs (1004) étant apte à être réalisée de manière à amener un dispositif informatique (1000) à exécuter l'ensemble des étapes du procédé selon l'une des revendications 1 à 13.

**15.** Dispositif, comprenant :

un dispositif de traitement (1004) ;
un dispositif de stockage (1008, 1010) couplé de manière communicative au dispositif de traitement (1004), le dispositif de stockage (1008, 1010) comprenant des instructions pour la réalisation de l'ensemble des étapes du procédé selon l'une des revendications 1 à 13.

FIGURE 1

**FIGURE 2**

FIGURE 3

EVENT 108

| TIMESTAMP, ID, USER ID, URL, IP, EVENT TYPE |

CCM 100

140
| EVENT PROFILER |

144
| EVENT PROCESSOR |

**EVENT DATABASE 146**

252 — USER PROFILE 104A

USER ID: 123456

INTENT DATA 106

264

254A — DOCUMENT DOWNLOAD    WEIGHT = .8   266
262   CAR      RELEVANCY = .5
    FUEL EFFICIENCY   RELEVANCY = .6

254B 266

IMPRESSION      WEIGHT = .2
   CAR       RELEVANCY = .4
   CLOUD COMPUTING   RELEVANCY = .8

254C

VISIT WEBPAGE     WEIGHT = .4
   ELECTRIC CARS   RELEVANCY =1.2
   BATTERIES     RELEVANCY =.8

**PERSONAL DATABASE 148**

252 — USER PROFILE 104B

USER ID: 123456

260 — THIRD PARTY IDS

262 — ATTRIBUTES
    COMPANY
    COMPANY SIZE
    COUNTRY
    JOB TITLE
    DOMAIN (HASH)
    EMAIL (HASH)

FIGURE 4

USER COMPUTER — 280

WHITE PAPER

STORAGE VIRTUALIZATION — 282A

NETWORK SECURITY SEMINAR — 282B

WEB PAGE VPN — 282C

EVENT 1: DOWNLOAD WHITEPAPER — 284A

EVENT 2: REGISTER FOR SEMINAR — 284B

EVENT 3: VIEW WEBPAGE — 284C

CCM 100

EVENT DATABASE 146

286  288

| | VIRTUAL STORAGE | NETWORK SECURITY | VPN | WEIGHT |
|---|---|---|---|---|
| CONTENT 282A | 0.7 | 0.5 | 0.0 | 0.5 |
| CONTENT 282B | 0.4 | 0.8 | 0.3 | 0.7 |
| CONTENT 282C | 0.3 | 0.2 | 0.6 | 0.2 |

290

USER PROFILE 104

USER INTENT VECTOR 294

| USER X | 0.69 | 0.85 | 0.33 |
|---|---|---|---|

# FIGURE 5

CCM 100

| | 286 VIRTUAL STORAGE | NETWORK SECURITY | VPN |
|---|---|---|---|
| USER X | 0.69 | 0.85 | 0.33 |

INTENT VECTOR 294A

⋮

| USER Y | 0.55 | 0.24 | 0.78 |

INTENT VECTOR 294B

298

| | 300A | 300B | 300C |
|---|---|---|---|
| CONTENT Z | 0.15 | 0.87 | 0.25 |

CONTENT Z

TO USER X

# FIGURE 6

302

118

WHAT COMPANIES ARE INTERESTED IN ELECTRIC CARS?

305

304

WHAT COMPANIES WOULD BE INTERESTED IN DOC 1?

DOC 1

306

COMPANY X

CCM 100

286

| STORAGE VIRT. | NETWORK SECURITY | ELECTRIC CARS | E-COMMERCE | FINANCE |
|---|---|---|---|---|

USER PROFILES 104

294A

307

308

310

[0.0, 1.0, 5.0, 1.0, 2.0] (ANALYST - WEIGHT=1.0, COMPANY X)

294B

[1.0, 1.0, 0.0, 0.2, 0.7] (ANALYST - WEIGHT=1.0, COMPANY X)

294C

[0.8, 1.2, 0.0, 0.0, 3.0] (VP FINANCE - WEIGHT=3.0, COMPANY X)

312A    COMPANY INTENT VECTOR

[1.8, 3.2, 5.0, 1.2, 5.7] (COMPANY X)

312B

[1.8, 3.2, 5.0, 1.2, 5.7] (COMPANY X/WEIGHTED)

316

314

[1.8, 2.2, 1.0, 1.0, 4.0] (VP FINANCE)

COMPOSITE PROFILES

## FIGURE 7

FIGURE 8

EP 3 398 146 B1

FIGURE 9

IDENTIFY ALL DOMAIN EVENTS FOR TIME PERIOD — 500

DETERMINE OVERALL RELEVENCY SCORE OVER ALL DOMAINS FOR TOPIC — 502

DETERMINE DOMAIN RELEVENCY SCORE FOR TOPIC — 504

GENERATE INITIAL CONSUMPTION SCORE BASED ON COMPARISON OF DOMAIN RELEVENCY SCORE WITH OVERALL RELEVENCY SCORE — 506

ADJUST COMSUMPTION SCORE BASED ON HISTORIC BASELINE OF DOMAIN EVENTS RELATED TO THE TOPIC (CONSUMPTION) — 508

ADJUST COMSUMPTION SCORE BASED ON NUMBER OF UNIQUE DOMAIN USERS CONSUMING CONTENT RELATED TO TOPIC — 510

IDENTIFY SURGE WHEN CONSUMPTION SCORE ABOVE THRESHOLD — 512

## FIGURE 10

CALCULATE OVERALL MEAN (M) AND STANDARD DEVIATION (SD) RELEVANCY FOR ALL EVENTS OF ALL DOMAINS THAT CONTAIN TOPIC — 520

CALCULATE MEAN DOMAIN RELEVENCY FOR GROUP OF DOMAIN EVENTS THAT CONTAIN TOPIC — 522

COMPARE DOMAIN MEAN DOMAIN RELEVENCY WITH OVERALL M AND SD — 524

CALCULATE INITIAL CONSUMPTION SCORE BASED ON COMPARISON OF DOMAIN RELEVENCY WITH OVERALL RELEVENCY SCORE — 526

RETURN

FIGURE 11

540 ASSIGN INITIAL CONSUMPTION
SCORE BASED ON RELEVANCY
OF EVENTS TO THE TOPIC

542 CONSUMPTION ABOVE
HISTORIC BASELINE FOR
CONSECUTIVE WEEKS — Y

N

544 CONSUMPTION ABOVE
BASELINE FOR PAST WEEK — Y → 546 REDUCE CONSUMPTION
SCORE BY FIRST AMOUNT

N

548 CONSUMPTION ABOVE
HISTORIC BASELINE MULITPLE
WEEKS WITH INTERRUPTION — Y → 550 REDUCE CONSUMPTION
SCORE BY SECOND AMOUNT

N

552 CONSUMPTION BELOW
HISTORIC BASELINE — Y → 554 REDUCE CONSUMPTION
SCORE BY THIRD AMOUNT

N

556 FIRST TIME DOMAIN — Y → 558 REDUCE CONSUMPTION
SCORE BY FOURTH AMOUNT

N

560 NUMBER OF UNIQUE USERS
DECREASING — Y → REDUCE CONSUMPTION
SCORE BY FIFTH AMOUNT 562

N

RETURN

FIGURE 12

35

IDENTIFY SURGING TOPIC FOR COMPANY ABC LOCATION Y — 580

IDENTIFY COMPANY ABC CONTACTS WITH JOB TITLE/ LOCATION ASSOCIATED WITH SURGING TOPIC — 582

MAP SURGING TOPIC TO IDENTIFIED COMPANY CONTACT PROFILES — 584

RETURN

# FIGURE 13

FIGURE 14

IDENTIFY IMPRESSIONS FOR CONTENT — 620

IDENTIFY DWELL TIME FOR CONTENT — 622

IDENTIFY SCROLL DEPTH — 624

IDENTIFY UP/DOWN SCROLL SPEED — 626

CALCULATE CONTENT ENGAGEMENT LEVEL BASED ON IMPRESSIONS — 628

ADJUST RELEVANCY SCORE BASED ON ENGAGEMENT LEVEL — 630

# FIGURE 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 98152915
- US 498056
- US 20100100537 A1
- US 7185065 B1
- US 20040267723 A1
- US 20140201240 A1